# EUROPEAN PATENT APPLICATION

(11) **EP 4 749 397 A1**
(43) Date of publication of application: **27.05.2026**
(21) Application number: 25814109.2
(22) Date of filing: 08.01.2025
(51) Int. Cl.: G06F 1/26

(54) **POWER SUPPLY METHOD, READABLE STORAGE MEDIUM, CHIP, AND ELECTRONIC DEVICE**

(30) Priority: 31.05.2024 CN 202410708890
(71) Applicant: HUAWEI TECHNOLOGIES CO., LTD., Shenzhen, Guangdong 518129 (CN)
(72) Inventor: ZHU, Wanneng, Shenzhen, Guangdong 518129 (CN); LI, Tao, Shenzhen, Guangdong 518129 (CN)
(74) Representative: Körber, Martin Hans
(86) International application number: PCT/CN2025/071304
(87) International publication number: WO 2025/246384

(57) **Abstract**

This application relates to the field of electronic technologies, and discloses a power supply method, a readable storage medium, a chip, and an electronic device. The electronic device may store a correspondence between voltage parameters of a power supply module and a phase switching current thresholds corresponding to different power supply groups. During running of the electronic device, the electronic device may obtain a current voltage parameter of the power supply module, and determine, based on the correspondence, a phase switching current threshold that matches the current voltage parameter. Then, based on a relationship between a current output current of a display screen power supply module and each determined phase switching current threshold, the electronic device may supply power to a load through a power supply group that has highest power supply efficiency and that corresponds to the current output current. In this way, because the phase switching current threshold matches a current input voltage and a current output voltage of the power supply module, it can be ensured that the power supply module operates at a number of power supply phases corresponding to high efficiency, to improve efficiency of supplying power to the load by the power supply module, and reduce power consumption of the electronic device.

## Description

This application claims priority to Chinese Patent Application No. 202410708890.5, filed with the China National Intellectual Property Administration on May 31, 2024 and entitled "POWER SUPPLY METHOD, READABLE STORAGE MEDIUM, CHIP, AND ELECTRONIC DEVICE", which is incorporated herein by reference in its entirety.

### TECHNICAL FIELD

This application relates to the field of electronic technologies, and in particular, to a power supply method, a readable storage medium, a chip, and an electronic device.

### BACKGROUND

A power supply module that supplies power to a display screen in an electronic device usually includes one or more power management integrated circuits (power management integrated circuits, PMICs), and each PMIC usually includes a plurality of power supply units. When the display screen needs a small current, the power supply module may supply power to the display screen through a small quantity of power supply units. When the display screen needs a large current, the power supply module may supply power to the display screen through a large quantity of power supply units.

Generally, when the power supply module supplies power through different quantities of power supply units, magnitudes of currents that can be provided by the power supply module overlap. For example, one power supply unit or two power supply units can be used to provide an output current ranging from 0 mA to 200 mA (where the quantity of used power supply units is referred to as a number of power supply phases below, and power supply units with different numbers of power supply phases form different power supply groups). However, when currents output by the PMIC are the same, power supply efficiency of the power supply module varies with the quantity of used power supply units. For example, when the output current is greater than 150 mA, power supply efficiency of supplying power through two power supply units is higher than power supply efficiency of supplying power through one power supply unit. To be specific, if the output current of the power supply module is 160 mA, the power supply efficiency of supplying power through two power supply units is higher than the power supply efficiency of supplying power through one power supply unit.

However, when electric energy output by the power supply module is the same, that is, when the same electric energy is provided for the display screen, lower power supply efficiency of a used power supply group indicates higher power consumption. In other words, for the foregoing example, if the output current of 160 mA needs to be provided for the display screen, power consumption of supplying power to the display screen through one power supply unit is higher than power consumption of supplying power through two power supply units.

### SUMMARY

This application provides a power supply method, a readable storage medium, a chip, and an electronic device, to ensure that in a PMIC, a power supply group with highest power supply efficiency is used to supply power to a load at a different voltage parameter and/or a different output current.

According to a first aspect, a power supply method is provided, applied to an electronic device. The electronic device includes a power supply module, and the power supply module includes a plurality of power supply units. The method includes: supplying power to a load of the electronic device through a first quantity of the power supply units; detecting, when a voltage parameter of the power supply module is a first voltage parameter, that a current output by the power supply module to the load changes to a first phase switching current threshold, and switching a quantity of power supply units used by the power supply module to supply power to the load from the first quantity to a second quantity, where the voltage parameter of the power supply module includes at least one of an input voltage and an output voltage of the power supply module; and detecting, when the voltage parameter of the power supply module is a second voltage parameter, that the current output by the power supply module to the load changes to a second phase switching current threshold, and switching the quantity of power supply units used by the power supply module to supply power to the load from the first quantity to the second quantity, where the second voltage parameter is different from the first voltage parameter, and the second phase switching current threshold is different from the first phase switching current threshold.

In the method, the first phase switching current threshold may be a phase switching current threshold for switching, at the first voltage parameter, a power supply group corresponding to the first quantity of power supply units to a power supply group corresponding to the second quantity of power supply units. Therefore, at the first voltage parameter, after an output current of the power supply module reaches the first phase switching current threshold, power supply efficiency of supplying power to the load through the power supply group corresponding to the second quantity of power supply units is higher than power supply efficiency of supplying power to the load through the power supply group corresponding to the first quantity of power supply units. The second phase switching current threshold may be a phase switching current threshold for switching, at the second voltage parameter, the power supply group corresponding to the first quantity of power supply units to the power supply group corresponding to the second quantity of power supply units. Therefore, at the second voltage parameter, after an output current of the power supply module reaches the second phase switching current threshold, the power supply efficiency of supplying power to the load through the power supply group corresponding to the second quantity of power supply units is higher than the power supply efficiency of supplying power to the load through the power supply group corresponding to the first quantity of power supply units. Based on this, when the voltage parameter of the power supply module varies, the electronic device switches, based on a relationship between the current output by the power supply module to the load and a phase switching current threshold corresponding to a current voltage parameter (the first voltage parameter or the second voltage parameter) of the power supply module, the quantity of power supply units used by the power supply module to supply power to the load. This can ensure that the power supply module supplies power to the load always through a quantity of power supply units with highest power supply efficiency.

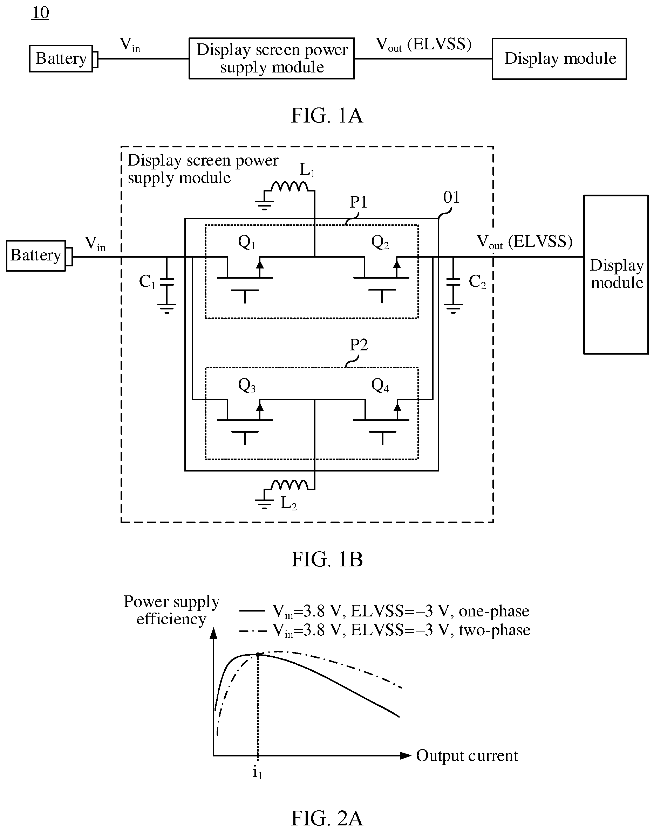

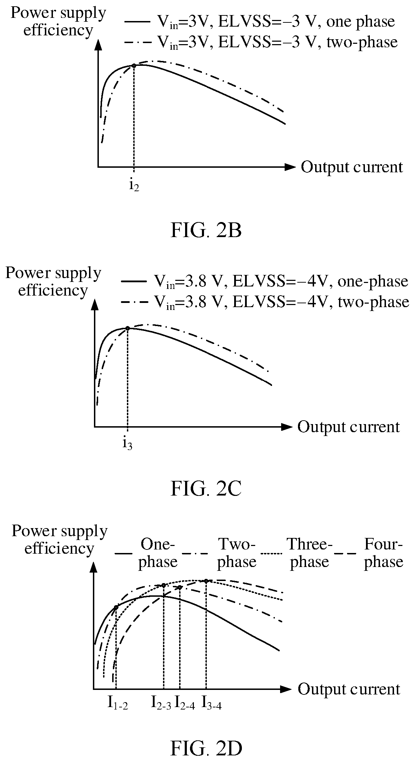

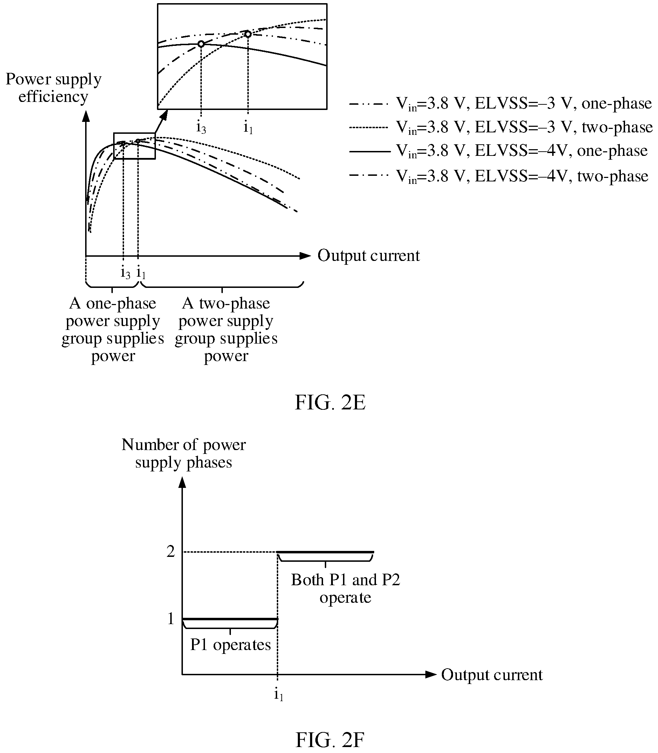

For example, for the following cases shown in FIG. 2A and FIG. 2C, the first voltage parameter may be the input voltage of 3.8 V and the output voltage of -3 V, the first phase switching current threshold may be i₁, the second voltage parameter may be the input voltage of 3.8 V and the output voltage of -4 V, and the second phase switching current threshold may be i₃. When the voltage parameter of the power supply module is the first voltage parameter, when the output current of the power supply module increases to i₁, the electronic device may switch the quantity of power supply units from 1 (used as the first quantity) to 2 (used as the second quantity); and when the voltage parameter of the power supply module is the second voltage parameter, when the output current of the power supply module increases to i₃, the electronic device may switch the quantity of power supply units from 1 (used as the first quantity) to 2 (used as the second quantity). Compared with the case shown in FIG. 2E, in this case, when the voltage parameter of the power supply module is the second voltage parameter, when the output current of the power supply module ranges from i₃ and i₁, the electronic device supplies power to the load through two power supply units (a two-phase power supply group) instead of supplying power to the load through one power supply unit (a one-phase power supply group). This improves power supply efficiency.

In a possible implementation of the first aspect, when the voltage parameter of the power supply module is the first voltage parameter, and the current output by the power supply module to the load changes to the first phase switching current threshold, the power supply efficiency of supplying power to the load through the second quantity of power supply units by the power supply module is higher than power supply efficiency of supplying power to the load through another quantity of power supply units; and when the voltage parameter of the power supply module is the second voltage parameter, and the current output by the power supply module to the load changes to the second phase switching current threshold, the power supply efficiency of supplying power to the load through the second quantity of power supply units by the power supply module is higher than power supply efficiency of supplying power to the load through another quantity of power supply units.

In a possible implementation of the first aspect, the second quantity is greater than the first quantity; and the detecting that the current output by the power supply module to the load changes to the first phase switching current threshold includes: detecting that the current output by the power supply module to the load increases to the first phase switching current threshold.

In a possible implementation of the first aspect, when the voltage parameter of the power supply module is the first voltage parameter, and the current output by the power supply module to the load is less than the first phase switching current threshold, the power supply efficiency of supplying power to the load through the first quantity of power supply units by the power supply module is higher than the power supply efficiency of supplying power to the load through the second quantity of power supply units; when the voltage parameter of the power supply module is the first voltage parameter, and the current output by the power supply module to the load is greater than the first phase switching current threshold, the power supply efficiency of supplying power to the load through the second quantity of power supply units by the power supply module is higher than the power supply efficiency of supplying power to the load through the first quantity of power supply units; when the voltage parameter of the power supply module is the second voltage parameter, and the current output by the power supply module to the load is less than the second phase switching current threshold, the power supply efficiency of supplying power to the load through the first quantity of power supply units by the power supply module is higher than the power supply efficiency of supplying power to the load through the second quantity of power supply units; and when the voltage parameter of the power supply module is the second voltage parameter, and the current output by the power supply module to the load is greater than the second phase switching current threshold, the power supply efficiency of supplying power to the load through the second quantity of power supply units by the power supply module is higher than the power supply efficiency of supplying power to the load through the first quantity of power supply units.

In a possible implementation of the first aspect, the second quantity is less than the first quantity; and the detecting that the current output by the power supply module to the load changes to the first phase switching current threshold includes: detecting that the current output by the power supply module to the load decreases to the first phase switching current threshold.

In a possible implementation of the first aspect, when the voltage parameter of the power supply module is the first voltage parameter, and the current output by the power supply module to the load is less than the first phase switching current threshold or the current output by the power supply module to the load is less than a sum of the first phase switching current threshold and a first current value, the power supply efficiency of supplying power to the load through the second quantity of power supply units by the power supply module is higher than the power supply efficiency of supplying power to the load through the first quantity of power supply units; when the voltage parameter of the power supply module is the first voltage parameter, and the current output by the power supply module to the load is greater than the first phase switching current threshold or the current output by the power supply module to the load is greater than the sum of the first phase switching current threshold and the first current value, the power supply efficiency of supplying power to the load through the first quantity of power supply units by the power supply module is higher than the power supply efficiency of supplying power to the load through the second quantity of power supply units; when the voltage parameter of the power supply module is the second voltage parameter, and the current output by the power supply module to the load is less than the second phase switching current threshold or the current output by the power supply module to the load is less than a sum of the second phase switching current threshold and the first current value, the power supply efficiency of supplying power to the load through the second quantity of power supply units by the power supply module is higher than the power supply efficiency of supplying power to the load through the first quantity of power supply units; and when the voltage parameter of the power supply module is the second voltage parameter, and the current output by the power supply module to the load is greater than the second phase switching current threshold or the current output by the power supply module to the load is greater than the sum of the second phase switching current threshold and the first current value, the power supply efficiency of supplying power to the load through the first quantity of power supply units by the power supply module is higher than the power supply efficiency of supplying power to the load through the second quantity of power supply units.

In this implementation, the first current value may be a negative value of the following hysteresis current value, and the first phase switching current threshold may be a difference obtained by subtracting the following hysteresis current value from a phase switching current threshold for switching the power supply group corresponding to the second quantity of power supply units to the power supply group corresponding to the first quantity of power supply units.

In a possible implementation of the first aspect, the first phase switching current threshold is determined based on the first voltage parameter and a first correspondence, and the second phase switching current threshold is determined based on the second voltage parameter and the first correspondence, where the first correspondence is a correspondence between the voltage parameter of the power supply module and a phase switching current threshold.

In a possible implementation of the first aspect, the power supply module includes three power supply units, and the three power supply units are disposed in a first power management integrated circuit; and the detecting, when a voltage parameter of the power supply module is a first voltage parameter, that a current output by the power supply module to the load changes to a first phase switching current threshold, and switching a quantity of power supply units used by the power supply module to supply power to the load from the first quantity to a second quantity specifically includes: obtaining, from the first correspondence based on the first voltage parameter, a third phase switching current threshold and a fourth phase switching current threshold that correspond to the first voltage parameter, where the fourth phase switching current threshold is greater than the third phase switching current threshold; and detecting, when the first phase switching current threshold is the third phase switching current threshold, that the current output by the power supply module to the load increases to the first phase switching current threshold, and switching the quantity of power supply units used by the power supply module to supply power to the load from 1 (used as the first quantity) to 2 (used as the second quantity); detecting, when the first phase switching current threshold is the fourth phase switching current threshold, that the current output by the power supply module to the load increases to the first phase switching current threshold, and switching the quantity of power supply units used by the power supply module to supply power to the load from 2 (used as the first quantity) to 3 (used as the second quantity); detecting, when the first phase switching current threshold is the third phase switching current threshold or the first phase switching current threshold is a difference obtained by subtracting a first current value from the third phase switching current threshold, that the current output by the power supply module to the load decreases to the first phase switching current threshold, and switching the quantity of power supply units used by the power supply module to supply power to the load from 2 (used as the first quantity) to 1 (used as the second quantity); or detecting, when the first phase switching current threshold is the fourth phase switching current threshold or the first phase switching current threshold is a difference obtained by subtracting a first current value from the fourth phase switching current threshold, that the current output by the power supply module to the load decreases to the first phase switching current threshold, and switching the quantity of power supply units used by the power supply module to supply power to the load from 3 (used as the first quantity) to 2 (used as the second quantity).

In this implementation, the first current value may be a negative value of the following hysteresis current value.

In a possible implementation of the first aspect, the detecting, when the voltage parameter of the power supply module is a second voltage parameter, that the current output by the power supply module to the load changes to a second phase switching current threshold, and switching the quantity of power supply units used by the power supply module to supply power to the load from the first quantity to the second quantity specifically includes: obtaining, from the first correspondence based on the second voltage parameter, a fifth phase switching current threshold and a sixth phase switching current threshold that correspond to the second voltage parameter, where the sixth phase switching current threshold is greater than the fifth phase switching current threshold, the sixth phase switching current threshold is different from the fourth phase switching current threshold, and the fifth phase switching current threshold is different from the third phase switching current threshold; and detecting, when the second phase switching current threshold is the fifth phase switching current threshold, that the current output by the power supply module to the load increases to the second phase switching current threshold, and switching the quantity of power supply units used by the power supply module to supply power to the load from 1 to 2; detecting, when the second phase switching current threshold is the sixth phase switching current threshold, that the current output by the power supply module to the load increases to the second phase switching current threshold, and switching the quantity of power supply units used by the power supply module to supply power to the load from 2 (used as the first quantity) to 3 (used as the second quantity); detecting, when the first phase switching current threshold is the fifth phase switching current threshold or the first phase switching current threshold is a difference obtained by subtracting the first current value from the fifth phase switching current threshold, that the current output by the power supply module to the load decreases to the second phase switching current threshold, and switching the quantity of power supply units used by the power supply module to supply power to the load from 2 (used as the first quantity) to 1 (used as the second quantity); or detecting, when the second phase switching current threshold is the sixth phase switching current threshold or the second phase switching current threshold is a difference obtained by subtracting the first current value from the sixth phase switching current threshold, that the current output by the power supply module to the load decreases to the second phase switching current threshold, and switching the quantity of power supply units used by the power supply module to supply power to the load from 3 (used as the first quantity) to 2 (used as the second quantity).

In a possible implementation of the first aspect, the power supply module includes a first power supply unit, a second power supply unit, a third power supply unit, and a fourth power supply unit, the first power supply unit and the second power supply unit are disposed in a second power management integrated circuit, and the third power supply unit and the fourth power supply unit are disposed in a third power management integrated circuit; and the detecting, when the voltage parameter of the power supply module is the first voltage parameter, that the current output by the power supply module to the load changes to the first phase switching current threshold, and switching the quantity of power supply units used by the power supply module to supply power to the load from the first quantity to the second quantity specifically includes: obtaining, from the first correspondence based on the first voltage parameter, a seventh phase switching current threshold and an eighth phase switching current threshold that correspond to the first voltage parameter, where the eighth phase switching current threshold is greater than the seventh phase switching current threshold; and detecting, when the first phase switching current threshold is the seventh phase switching current threshold, that the current output by the power supply module to the load increases to the first phase switching current threshold, and switching the quantity of power supply units used by the power supply module to supply power to the load from 1 (used as the first quantity) to 2 (the second quantity); detecting, when the first phase switching current threshold is the eighth phase switching current threshold, that the current output by the power supply module to the load increases to the first phase switching current threshold, and switching the quantity of power supply units used by the power supply module to supply power to the load from 2 (used as the first quantity) to 4 (used as the second quantity); detecting, when the first phase switching current threshold is the seventh phase switching current threshold or the first phase switching current threshold is a difference obtained by subtracting a first current value from the seventh phase switching current threshold, that the current output by the power supply module to the load decreases to the first phase switching current threshold, and switching the quantity of power supply units used by the power supply module to supply power to the load from 2 (used as the second quantity) to 1 (used as the first quantity); or detecting, when the first phase switching current threshold is the eighth phase switching current threshold or the first phase switching current threshold is a difference obtained by subtracting a first current value from the eighth phase switching current threshold, that the current output by the power supply module to the load decreases to the first phase switching current threshold, and switching the quantity of power supply units used by the power supply module to supply power to the load from 4 (used as the first quantity) to 2 (used as the second quantity).

In this implementation, the first current value may be a negative value of the following hysteresis current value.

In a possible implementation of the first aspect, the detecting, when the voltage parameter of the power supply module is a second voltage parameter, that the current output by the power supply module to the load changes to a second phase switching current threshold, and switching the quantity of power supply units used by the power supply module to supply power to the load from the first quantity to the second quantity specifically includes: obtaining, from the first correspondence based on the first voltage parameter, a ninth phase switching current threshold and a tenth phase switching current threshold that correspond to the first voltage parameter, where the tenth phase switching current threshold is greater than the ninth phase switching current threshold; and detecting, when the second phase switching current threshold is the ninth phase switching current threshold, that the current output by the power supply module to the load increases to the second phase switching current threshold, and switching the quantity of power supply units used by the power supply module to supply power to the load from 1 (used as the first quantity) to 2 (used as the second quantity); detecting, when the second phase switching current threshold is the tenth phase switching current threshold, that the current output by the power supply module to the load increases to the second phase switching current threshold, and switching the quantity of power supply units used by the power supply module to supply power to the load from 2 (used as the first quantity) to 4 (used as the second quantity); detecting, when the second phase switching current threshold is the ninth phase switching current threshold or the second phase switching current threshold is a difference obtained by subtracting the first current value from the ninth phase switching current threshold, that the current output by the power supply module to the load decreases to the second phase switching current threshold, and switching the quantity of power supply units used by the power supply module to supply power to the load from 2 (used as the first quantity) to 1 (used as the second quantity); or detecting, when the second phase switching current threshold is the tenth phase switching current threshold or the second phase switching current threshold is a difference obtained by subtracting the first current value from the tenth phase switching current threshold, that the current output by the power supply module to the load decreases to the second phase switching current threshold, and switching the quantity of power supply units used by the power supply module to supply power to the load from 4 (used as the first quantity) to 2 (used as the second quantity).

In a possible implementation of the first aspect, the switching the quantity of power supply units used by the power supply module to supply power to the load from 1 to 2 specifically includes: switching the power supply unit used to supply power to the load from the first power supply unit to the first power supply unit and the second power supply unit; and the switching the quantity of power supply units used by the power supply module to supply power to the load from 2 to 4 specifically includes: switching the power supply units used to supply power to the load from the first power supply unit and the second power supply unit to the first power supply unit, the second power supply unit, the third power supply unit, and the fourth power supply unit.

In a possible implementation of the first aspect, the load is a display screen of the electronic device, and the output voltage of the power supply module is used to provide an emitter layer voltage supply source for the display screen.

In a possible implementation of the first aspect, the output voltage of the power supply module is determined based on luminance of the display screen and a second correspondence, where the second correspondence is a correspondence between a voltage value of the emitter layer voltage supply source of the display screen and the luminance of the display screen.

According to a second aspect, a power supply method is provided, applied to an electronic device. The electronic device includes a power supply module, and the power supply module includes a plurality of power supply units. The method includes: obtaining a third voltage parameter of the power supply module, where the voltage parameter of the power supply module includes at least one of an input voltage and an output voltage of the power supply module; determining, based on a first correspondence, at least one phase switching current threshold corresponding to the third voltage parameter, where the first correspondence is a correspondence between the voltage parameter of the power supply module and a phase switching current threshold; and supplying, based on a relationship between the at least one phase switching current threshold and a first current output by the power supply module to a load of the electronic device, power to the load through a third quantity of the power supply units, where when the voltage parameter of the power supply module is the third voltage parameter, and a current output by the power supply module to the load is the first current, power supply efficiency of supplying power to the load by the power supply module through the third quantity of the power supply units is higher than power supply efficiency of supplying power to the load through another quantity of the power supply units.

In a possible implementation of the second aspect, the at least one phase switching current threshold includes an eleventh phase switching current threshold; when the voltage parameter of the power supply module is the third voltage parameter, and the current output by the power supply module to the load is greater than the eleventh phase switching current threshold, the power supply efficiency of supplying power to the load by the power supply module through the third quantity of power supply units is higher than power supply efficiency of supplying power to the load through a fourth quantity of power supply units, where the fourth quantity is less than the third quantity; when the voltage parameter of the power supply module is the third voltage parameter, and the current output by the power supply module to the load is less than the eleventh phase switching current threshold, the power supply efficiency of supplying power to the load by the power supply module through the third quantity of power supply units is lower than the power supply efficiency of supplying power to the load through a fourth quantity of power supply units; and the supplying, based on the relationship between the at least one phase switching current threshold and the first current output by the power supply module to the load of the electronic device, power to the load through the third quantity of the power supply units specifically includes: detecting that the first current increases to the eleventh phase switching current threshold, and supplying power to the load through the third quantity of the power supply units.

In a possible implementation of the second aspect, the at least one phase switching current threshold includes a twelfth phase switching current threshold; when the voltage parameter of the power supply module is the third voltage parameter, and the current output by the power supply module to the load is greater than the twelfth phase switching current threshold, the power supply efficiency of supplying power to the load by the power supply module through the third quantity of power supply units is lower than power supply efficiency of supplying power to the load through a fifth quantity of power supply units, where the fifth quantity is greater than the third quantity; when the voltage parameter of the power supply module is the third voltage parameter, and the current output by the power supply module to the load is less than the twelfth phase switching current threshold, the power supply efficiency of supplying power to the load by the power supply module through the third quantity of power supply units is higher than the power supply efficiency of supplying power to the load through the fifth quantity of power supply units; and the supplying, based on the relationship between the at least one phase switching current threshold and the first current output by the power supply module to the load of the electronic device, power to the load through the third quantity of the power supply units specifically includes: detecting that the first current decreases to the twelfth phase switching current threshold or the first current decreases to a difference obtained by subtracting a third current value from the twelfth phase switching current threshold, and supplying power to the load through the third quantity of the power supply units.

According to a third aspect, an electronic device is provided, including one or more processors, where the one or more processors are configured to perform the power supply method provided in the first aspect and any possible implementation of the first aspect.

According to a fourth aspect, a readable storage medium is provided. The readable storage medium includes instructions. When the instructions are executed by an electronic device, the electronic device is caused to implement the power supply method according to the first aspect and any one of the possible implementations of the first aspect.

According to a fifth aspect, a chip is provided. The chip includes a control unit, a voltage sampling circuit, a current sampling circuit, and the foregoing power supply module. The voltage sampling circuit is configured to collect the first voltage parameter and the second voltage parameter. The current sampling circuit is configured to collect a current output by the power supply module to a load. The control unit is configured to perform the power supply method according to the first aspect and any one of the possible implementations of the first aspect.

It should be noted that for beneficial effects of the third aspect to the fifth aspect, refer to the beneficial effects of the first aspect. Details are not described herein again.

### BRIEF DESCRIPTION OF DRAWINGS

FIG. 1A is a diagram of supplying power to a display screen through a display screen power supply module in an electronic device according to some embodiments of this application;
FIG. 1B is a diagram of a PMIC according to some embodiments of this application;
FIG. 2A is a diagram of a power supply efficiency curve of a PMIC 01 at a voltage parameter according to some embodiments of this application;
FIG. 2B is a diagram of a power supply efficiency curve of a PMIC 01 at another voltage parameter according to some embodiments of this application;
FIG. 2C is a diagram of a power supply efficiency curve of a PMIC 01 at still another voltage parameter according to some embodiments of this application;
FIG. 2D is a diagram of a power supply efficiency curve of a PMIC according to some embodiments of this application;
FIG. 2E is a diagram in which a number of power supply phases of a PMIC 01 changes with an output current according to some embodiments of this application;
FIG. 2F is another diagram in which a number of power supply phases of a PMIC 01 changes with an output current according to some embodiments of this application;
FIG. 2G is still another diagram in which a number of power supply phases of a PMIC 01 changes with an output current according to some embodiments of this application;
FIG. 3A is a schematic flowchart of a power supply method according to some embodiments of this application;
FIG. 3B is a diagram of a power supply group used during a change of an output current of a display screen power supply module according to some embodiments of this application;
FIG. 4 is a schematic flowchart of a power supply method according to some embodiments of this application;
FIG. 5A is a diagram of supplying power to a display module via a PMIC 02 according to some embodiments of this application;
FIG. 5B is a diagram of a power supply efficiency curve of a PMIC 02 according to some embodiments of this application;
FIG. 6A is a diagram of supplying power to a display module via a PMIC 03 and a PMIC 04 according to some embodiments of this application;
FIG. 6B is a diagram of supplying power to a display module via a PMIC 05 and a PMIC 06 according to some embodiments of this application;
FIG. 7 is a schematic flowchart of another power supply method according to some embodiments of this application;
FIG. 8 is a schematic flowchart of still another power supply method according to some embodiments of this application;
FIG. 9 is a diagram of supplying power to a display module via a PMIC 07 and a PMIC 08 according to some embodiments of this application;
FIG. 10 is a schematic flowchart of yet another power supply method according to some embodiments of this application; and
FIG. 11 is a diagram of a structure of an electronic device 400 according to some embodiments of this application.

### DESCRIPTION OF EMBODIMENTS

Illustrative embodiments of this application include but are not limited to a power supply method, a readable storage medium, a chip, and an electronic device.

It should be noted that the solutions provided in embodiments of this application may be applied to any scenario in which a plurality of power supply units are used to supply power to a load, for example, a scenario in which a negative voltage (for example, an emitter layer voltage supply source (emitter layer voltage supply source, ELVSS)) or a positive voltage is provided for a display screen via a PMIC. This is not limited herein. In the following embodiments, the technical solutions of this application are described by using an example in which the plurality of power supply units are used to provide an ELVSS for the display screen in a display module.

For ease of description, in the following embodiments, the PMIC that supplies power to the display module in the electronic device is referred to as a display screen power supply module. When the display screen power supply module in the electronic device supplies power to the load through i power supply units, the i power supply units are used as an i-phase power supply group. The i power supply units may be power supply units in a same PMIC, or may be power supply units in different PMICs.

The technical solutions in this application are described below with reference to the accompanying drawings.

FIG. 1A is a diagram of supplying power to a display screen through a display screen power supply module in an electronic device according to some embodiments of this application.

As shown in FIG. 1A, an electronic device 10 may include a battery, a display screen power supply module, and a display module. The display screen power supply module may include one or more PMICs. The battery of the electronic device 10 may provide an input voltage (Vᵢₙ) for the PMIC in the display screen power supply module. An output voltage (Vₒᵤₜ) of the PMIC in the display screen power supply module may be used to supply power to the display module, for example, provide an ELVSS for the display screen in the display module.

It should be noted that the PMIC is also referred to as a power management chip, a power driver chip, a driver chip, a power supply chip, a power chip, or the like, and is an integrated circuit for voltage conversion. One PMIC may include a plurality of power supply units (where the power supply unit may also be referred to as a voltage converter, a voltage conversion circuit, a voltage transformer, a voltage transformation circuit, a direct current-direct current voltage converter (direct current-direct current voltage converter, DC-DC converter), a boost converter (boost converter), a buck converter (buck converter), a low dropout regulator (low dropout regulator, LDO), or the like). The PMIC may supply power to the display screen, a display driver integrated circuit (display driver integrated circuit, DDIC), and the like in the display module through a part of or all of the plurality of power supply units. In some embodiments, a power supply unit may be a set of circuits that are in the PMIC and that can independently provide a voltage/current for the load.

For example, FIG. 1B is a diagram of a PMIC according to some embodiments of this application.

As shown in FIG. 1B, the display screen power supply module in the electronic device 10 includes a PMIC 01, the PMIC 01 includes a power supply unit P1 and a power supply unit P2, the power supply unit P1 includes a field effect transistor Q1 and a field effect transistor Q2, and the power supply unit P2 includes a field effect transistor Q3 and a field effect transistor Q4. The field effect transistor Q1 is connected to one end of a capacitor C1 and is configured to receive an input voltage Vᵢₙ provided by the battery. A drain of the field effect transistor Q1 is connected to a source of the field effect transistor Q2 and one end of an inductor L1. A drain of the field effect transistor Q2 is connected to one end of a capacitor C2 and is configured to output a voltage Vₒᵤₜ (for example, an ELVSS) to the display module. The other end of the capacitor C1, the other end of the capacitor C2, and the other end of the inductor L1 are grounded. The field effect transistor Q3 is connected to the end of the capacitor C1. A drain of the field effect transistor Q3 is connected to a source of the field effect transistor Q4 and one end of an inductor L2. A drain of the field effect transistor Q4 is connected to the end of the capacitor C2. The other end of the inductor L2 is grounded. The PMIC 01 may input control signals to gates of the field effect transistor Q1, the field effect transistor Q2, the field effect transistor Q3, and the field effect transistor Q4 based on an internal control circuit (for example, a microcontroller, which is not shown), to control on and off of the field effect transistor Q1, the field effect transistor Q2, the field effect transistor Q3, and the field effect transistor Q4, so as to control the power supply unit P1 and/or the power supply unit P2 to supply power to the load.

It should be noted that one PMIC may have a plurality of groups of power supply units, and one or more of the plurality of groups of power supply units may be configured to supply power to the display screen power supply module. Power supply units that are in one or more PMICs and that supply power to a same load always have a same input voltage and a same output voltage. The power supply units that supply power to the same load supply power to the display module in a parallel manner.

It should be noted that in embodiments of this application, for example, the PMIC includes only a power supply unit that provides an ELVSS for the display module. In some other embodiments, the PMIC may further include one or more groups of power supply units that provide a voltage other than the ELVSS for the display module (or provide a voltage other than the ELVSS for another module). This is not limited herein.

It should be noted that the structure of the PMIC 01 shown in FIG. 1B is merely an example. The power supply unit may be of another structure. The PMIC may also include more power supply units. The PMIC may further include more modules, for example, a control unit, a storage unit (for example, a register), a detection unit (for example, a circuit or module configured to detect a voltage or a current), and another functional circuit. This is not limited herein.

As described in the background, when supplying same electric energy to the load, if the display screen power supply module supplies power to the load through a corresponding power supply group with low power supply efficiency at an output current, power consumption of the display screen power supply module is higher.

In view of this, an embodiment of this application discloses a power supply method. In the method, a correspondence between different output currents of a display screen power supply module and a number of power supply phases corresponding to highest power supply efficiency at a corresponding output current is established in advance. In this way, during power supply, an electronic device may obtain a current output current of the display screen power supply module, and supply power to a load through a power supply group with highest power supply efficiency based on the correspondence and the current output current, so as to improve power supply efficiency of the display screen power supply module and reduce power consumption of the electronic device.

Generally, power supply efficiency of the display screen power supply module during power supply at different numbers of phases is associated with an output current, an input voltage, and an output voltage of the display screen power supply module.

To be specific, generally, power supply efficiency of a power supply group of the display screen power supply module first increases and then decreases as the output current increases. For two power supply groups with different numbers of power supply phases, there is an intersection point between curves (referred to as power supply efficiency curves below) in which power supply efficiency changes with an output current (where an output current corresponding to the intersection point is referred to as a phase switching current threshold for the two power supply groups). At the intersection point, power supply efficiency of the two power supply groups is the same. In addition, on different sides of the intersection point, a value relationship between the power supply efficiency of the two power supply groups is different. For example, as shown in FIG. 2A, corresponding to the foregoing PMIC 01, when the input voltage (Vᵢₙ) is 3.8 V and the output voltage (ELVSS) is -3 V, an output current corresponding to an intersection point between a power supply efficiency curve of a one-phase power supply group and a power supply efficiency curve of a two-phase power supply group is i₁ (used as a phase switching current threshold for switching from one phase to two phases). When an output current of the PMIC 01 is i₁, power supply efficiency of the one-phase power supply group is the same as power supply efficiency of the two-phase power supply group; when the output current of the PMIC 01 is less than i₁, the power supply efficiency of the one-phase power supply group is higher than the power supply efficiency of the two-phase power supply group; and when the output current of the PMIC 01 is greater than i₁, the power supply efficiency of the one-phase power supply group is lower than the power supply efficiency of the two-phase power supply group. For ease of description, a current corresponding to an intersection point between a power supply efficiency curve of an x-phase power supply group and a power supply efficiency curve of a y-phase power supply group is denoted as I_{x-y} below.

In addition, for two power supply groups, phase switching current thresholds corresponding to the two power supply groups are different at different output voltages or input voltages.

For example, refer to FIG. 2B. Compared with the case shown in FIG. 2A, in this case, when the input voltage of the PMIC 01 is adjusted from 3.8 V to 3 V, and the output voltage remains unchanged at -3 V, the phase switching current threshold for the one-phase power supply group and the two-phase power supply group of the PMIC 01 changes from i₁ to i₂ (i₂<i₁). In other words, when the output current is i₂, the power supply efficiency of the one-phase power supply group is the same as the power supply efficiency of the two-phase power supply group; when the output current is less than i₂, the power supply efficiency of the one-phase power supply group is higher than the power supply efficiency of the two-phase power supply group; and when the output current is greater than i₂, the power supply efficiency of the one-phase power supply group is lower than the power supply efficiency of the two-phase power supply group.

For another example, refer to FIG. 2C. Compared with the case shown in FIG. 2A, in this case, when the output voltage of the PMIC 01 is adjusted from -3 V to -4 V, and the input voltage remains unchanged at 3.8 V, the phase switching current threshold for the one-phase power supply group and the two-phase power supply group of the PMIC 01 changes from i₁ to i₃ (i₃<i₂<i₁). In other words, when the output current is i₃, the power supply efficiency of the one-phase power supply group is the same as the power supply efficiency of the two-phase power supply group; when the output current is less than i₃, the power supply efficiency of the one-phase power supply group is higher than the power supply efficiency of the two-phase power supply group; and when the output current is greater than i₃, the power supply efficiency of the one-phase power supply group is lower than the power supply efficiency of the two-phase power supply group.

In addition, for power supply groups with different numbers of phases, when an input voltage and an output voltage are fixed, a larger number of phases corresponding to a power supply group indicates a larger corresponding phase switching current threshold. Corresponding to a case in which the display screen power supply module in the electronic device includes n power supply units, when the input voltage and the output voltage are fixed, assuming that a phase switching current threshold for an i-phase power supply group and an (i+1)-phase power supply group is Iᵢ₋₍ᵢ₊₁₎, a larger i indicates a larger phase switching current threshold Iᵢ₋₍ᵢ₊₁₎ (where i is an integer greater than 0 and less than n).

For example, assuming that the display screen power supply module in the electronic device includes four power supply units, correspondingly, there is a one-phase power supply group, a two-phase power supply group, a three-phase power supply group, and a four-phase power supply group. Refer to FIG. 2D. A phase switching current threshold for the one-phase power supply group and the two-phase power supply group is I₁₋₂, a phase switching current threshold for the two-phase power supply group and the three-phase power supply group is I₂₋₃ (I₂₋₃>I₁₋₂), and a phase switching current threshold for the three-phase power supply group and the four-phase power supply group is I₃₋₄ (I₃₋₄>I₂₋₃). In other words, when the output current is less than I₁₋₂, the power supply efficiency is highest when the one-phase power supply group is used to supply power; when the output current is greater than I₁₋₂ and less than I₂₋₃, the power supply efficiency is highest when the two-phase power supply group is used to supply power; when the output current is greater than I₂₋₃ and less than I₃₋₄, the power supply efficiency is highest when the three-phase power supply group is used to supply power; and when the output current is greater than I₃₋₄, the power supply efficiency is highest when the four-phase power supply group is used to supply power.

Based on this, if impact of the input voltage and the output voltage is not considered when the correspondence between different output currents of the display screen power supply module and a number of power supply phases corresponding to highest power supply efficiency at a corresponding output current is established, the PMIC cannot operate at the number of power supply phases corresponding to the highest power supply efficiency.

For example, if the input voltage (Vᵢₙ) of the PMIC 01 is 3.8 V and the output voltage (ELVSS) is -4 V, the phase switching current threshold i₁ corresponding to the case in which the input voltage (Vᵢₙ) is 3.8 V and the output voltage (ELVSS) is -3 V shown in FIG. 2A is used. Refer to FIG. 2E. When the output current is less than i₁, the PMIC 01 supplies power through the one-phase power supply group; and when the output current is greater than i₁, the PMIC 01 supplies power through the two-phase power supply group. However, when the input voltage (Vᵢₙ) of the PMIC 01 is 3.8 V, the output voltage (ELVSS) is -4 V, and the output current is greater than i₃ and less than i₁, power supply efficiency of the PMIC 01 using the one-phase power supply group is lower than power supply efficiency of the PMIC 01 using the two-phase power supply group. Consequently, when the output current is greater than i₃ and less than i₁, the PMIC 01 cannot operate at the number of power supply phases corresponding to the highest power supply efficiency.

Therefore, the impact of the input voltage and the output voltage needs to be considered when the correspondence between different output currents of the display screen power supply module and a number of power supply phases corresponding to highest power supply efficiency at a corresponding output current is established. Based on the relationship between the input voltage, the output voltage, the output current, and the power supply efficiency of the display screen power supply module, when the input voltage of the display screen power supply module is a fixed input voltage and the output voltage is a fixed output voltage, phase switching current thresholds corresponding to different power supply groups of the display screen power supply module at the fixed input voltage and the fixed output voltage may be obtained through measurement. During running of the electronic device, the electronic device may adjust, based on a relationship between phase switching current thresholds of the output current of the display screen power supply module, a number of phases at which the display screen power supply module supplies power to a display module, so that a power supply group with highest power supply efficiency is used to supply power to the load.

For example, corresponding to the foregoing PMIC 01, if the input voltage of the PMIC 01 is fixed at 3.8 V, and the output voltage is fixed at -3 V, the phase switching current threshold for the one-phase power supply group and the two-phase power supply group is i₁. During running of the PMIC 01, the current output current of the PMIC 01 may be compared with i₁, and a number of power supply phases is determined based on a relationship between the current output current and i₁. For example, refer to FIG. 2F. When the current output current of the PMIC 01 is less than or equal to i₁, power is supplied through the one-phase power supply group (for example, the power supply unit P1 operates, and the power supply unit P2 does not operate); and when the current output current of the PMIC 01 is greater than i₁, power is supplied through the two-phase power supply group (for example, both the power supply unit P1 and the power supply unit P2 operate). In this way, it can be ensured that the PMIC 01 supplies power to the load through a power supply group with high power supply efficiency, to reduce power consumption of the electronic device.

In some cases, the input voltage and/or the output voltage of the display screen power supply module are/is usually not fixed, and change/changes with a power supply or a load. For example, with reference to the case shown in FIG. 1A, in the electronic device 10, a battery usually supplies power to the display screen power supply module, and a voltage of the battery changes with a remaining state of charge of the battery. Therefore, the input voltage of the display screen power supply module may change. For another example, luminance of a display screen (for example, a display screen that uses an organic light-emitting diode (organic light-emitting diode, OLED) or an active-matrix organic light-emitting diode (active-matrix organic light-emitting diode, AMOLED)) in the electronic device 10 is usually associated with a value of an ELVSS, and different ELVSSs correspond to different luminance. Therefore, an ELVSS output by the display screen power supply module to the display screen changes with the luminance of the display screen.

To improve efficiency of supplying power to the load by the display screen power supply module when the input voltage and/or the output voltage of the display screen power supply module (that is, the input voltage and/or the output voltage of the PMIC in the display screen power supply module) change/changes, in the power supply method provided in this embodiment of this application, the electronic device may store correspondences between voltage parameters (for example, the input voltage and/or the output voltage, referred to as the voltage parameter for short below) of the display screen power supply module (for example, 3.8 V and -3 V in FIG. 2A, 3 V and -3 V in FIG. 2B, and 3.8 V and -4 V in FIG. 2C) and phase switching current thresholds corresponding to different power supply groups (where the correspondences are referred to as a first correspondence below, for example, a correspondence between 3.8 V and -3 V and I₁ in FIG. 2A, a correspondence between 3 V and -3 V and I₂ in FIG. 2B, and a correspondence between 3.8 V and -4 V and I₃ in FIG. 2C).

During running of the electronic device, the electronic device may obtain a current voltage parameter (for example, a current input voltage (for example, a supply voltage of the battery of the electronic device) and a current output voltage (for example, a voltage output by the display screen power supply module to the display module) of the display screen power supply module), and determine, based on the first correspondence, a phase switching current threshold that matches the current voltage parameter. Then, based on a relationship between the current output current of the display screen power supply module and each determined phase switching current threshold, the electronic device may supply power to the load (for example, provide an ELVSS for the display screen) through a power supply group that has highest power supply efficiency and that corresponds to the current output current. In this way, because the phase switching current threshold matches the current input voltage and the current output voltage of the display screen power supply module, it can be ensured that the display screen power supply module operates at a number of power supply phases corresponding to high efficiency, to improve efficiency of supplying power to the load by the display screen power supply module, and reduce power consumption of the electronic device.

In addition, because electric energy consumed by the display screen power supply module is usually converted into heat, higher power supply efficiency of the display screen power supply module indicates less electric energy consumed by the display screen power supply module and less heat generated. According to the foregoing method, heat generated by the PMIC in the electronic device can be further reduced.

It should be noted that, the voltage parameter of the display screen power supply module may vary depending on different application scenarios. For example, in an application scenario in which the input voltage of the display screen power supply module is fixed (or the input voltage changes within a small range) and the output voltage changes, the voltage parameter may include the output voltage of the display screen power supply module; in an application scenario in which the output voltage of the display screen power supply module is fixed (or the output voltage changes within a small range) and the input voltage changes, the voltage parameter may include the input voltage of the display screen power supply module; or in an application scenario in which both the input voltage and the output voltage of the display screen power supply module change, the voltage parameter may include the input voltage and the output voltage of the display screen power supply module. For ease of description, the technical solutions of this application are described below by using the application scenario in which both the input voltage and the output voltage of the display screen power supply module change.

For example, corresponding to the case shown in FIG. 1B, the electronic device may store correspondences between different voltage parameters (for example, different combinations of the input voltage and/or the output voltage) of the display screen power supply module and different phase switching current thresholds (denoted as I₁₋₂) of the one-phase power supply group and the two-phase power supply group. In other words, the first correspondence may be a correspondence between a voltage parameter and I₁₋₂, corresponding to a voltage parameter (for example, a combination of the input voltage and the output voltage). The electronic device may determine a value of I₁₋₂ based on the first correspondence.

In this way, when the input voltage is 3.8 V and the output voltage is -3 V, the electronic device may determine that I₁₋₂ is i₁ shown in FIG. 2A, and supply power to the display module through the two-phase power supply group when the output current of the PMIC 01 increases to i₁ and supply power to the display module through the one-phase power supply group when the output current of the PMIC 01 decreases to i₁; when the input voltage is 3 V and the output voltage is -3 V, the electronic device may determine that I₁₋₂ is i₂ shown in FIG. 2B, and supply power to the display module through the two-phase power supply group when the output current of the PMIC 01 increases to i₂ and supply power to the display module through the one-phase power supply group when the output current of the PMIC 01 decreases to i₂; and when the input voltage is 3.8 V and the output voltage is -4 V, the electronic device may determine that I₁₋₂ is i₃ shown in FIG. 2C, and supply power to the display module through the two-phase power supply group when the output current of the PMIC 01 increases to i₃ and supply power to the display module through the one-phase power supply group when the output current of the PMIC 01 decreases to i₃.

In some embodiments, for the electronic device whose display screen power supply module includes n (where n is a positive integer greater than 1) power supply units, there may be a maximum of n power supply groups, for example, a one-phase power supply group, a two-phase power supply group, ..., and an n-phase power supply group. The electronic device may be designed to supply power to the display module through m power supply groups in the n power supply groups (where m is a positive integer less than or equal to n). A number of phases corresponding to a k^{th} power supply group in the m power supply groups increases with k. In the foregoing case, in the first correspondence, each voltage parameter may correspond to m-1 phase switching current thresholds, where a j^{th} (where j is a positive integer less than m) phase switching current threshold is a phase switching current threshold for a j^{th} power supply group and a (j+1)^{th} power supply group, which is denoted as I_{j→j+1}.

In some embodiments, in the m power supply groups, each power supply group corresponds to a different number of phases, that is, a different quantity of power supply units, and the m power supply groups correspond to m power supply units.

In some implementations, if the j^{th} power supply group is an x-phase power supply group, and the (j+1)^{th} power supply group is a y-phase power supply group, I_{j→j+1} at a voltage parameter may be an output current I_{x-y} corresponding to an intersection point between a power supply efficiency curve of the x-phase power supply group and a power supply efficiency curve of the y-phase power supply group at the voltage parameter. In this way, in a case in which j is less than m-1, when the current output current Iₒᵤₜ of the display screen power supply module is greater than I_{j→j+1} and less than I_{j→j+2}, the power supply efficiency is highest when the (j+1)^{th} power supply group is used; when the current output current Iₒᵤₜ of the display screen power supply module is less than or equal to I_{j→j+1}, the power supply efficiency is highest when a 1^{st} power supply group is used; and when the current output current Iₒᵤₜ of the display screen power supply module is greater than I_{(m-1)→m}, the power supply efficiency is highest when an m^{th} power supply group is used.

For example, if the display screen power supply module in the electronic device includes four power supply units, there may be four power supply groups, namely, a one-phase power supply group, a two-phase power supply group, a three-phase power supply group, and a four-phase power supply group.

When the display screen power supply module may supply power to the display module through the one-phase power supply group (serving as the 1^{st} power supply group), the two-phase power supply group (serving as a 2^{nd} power supply group), the three-phase power supply group (serving as a 3^{rd} power supply group), or the four-phase power supply group (serving as a 4^{th} power supply group), that is, m=n=4, there may be three phase switching current thresholds (for example, I_{1→2}, I_{2→3}, and I_{3→4}), and in the first correspondence, each voltage parameter corresponds to values of a group of I_{1→2}, I_{2→3}, and I_{3→4}. Refer to FIG. 2D. In this case, I_{1→2} may be an output current I₁₋₂ corresponding to an intersection point between a power supply efficiency curve of the one-phase power supply group and a power supply efficiency curve of the two-phase power supply group, I_{2→3} may be an output current I₂₋₃ corresponding to an intersection point between the power supply efficiency curve of the two-phase power supply group and a power supply efficiency curve of the three-phase power supply group, and I_{3→4} may be an output current I₃₋₄ corresponding to an intersection point between the power supply efficiency curve of the three-phase power supply group and a power supply efficiency curve of the four-phase power supply group.

When the display screen power supply module may supply power to the display module through the one-phase power supply group (serving as the 1^{st} power supply group), the two-phase power supply group (serving as a 2^{nd} power supply group), or the four-phase power supply group (serving as a 3^{rd} power supply group), that is, m=3, there may be two phase switching current thresholds (for example, I_{1→2} (a phase switching current threshold for switching from the one-phase power supply group to the two-phase power supply group) and I_{2→3} (a phase switching current threshold for switching from the two-phase power supply group to the four-phase power supply group)), and in the first correspondence, each voltage parameter corresponds to values of a group of I_{1→2} and I_{2→4}. Refer to FIG. 2D. In this case, I_{1→2} may be an output current I₁₋₂ corresponding to an intersection point between a power supply efficiency curve of the one-phase power supply group and a power supply efficiency curve of the two-phase power supply group, and I_{2→3} may be an output current I₂₋₄ corresponding to an intersection point between the power supply efficiency curve of the three-phase power supply group and a power supply efficiency curve of the four-phase power supply group.

In some embodiments, the first correspondence may be stored by using a table, an extensible markup language (extensible markup language, XML), a text file, or another data structure, or may be stored by using a function fthat indicates a correspondence between a voltage parameter and a phase switching current threshold (for example, phase switching current threshold I_{C}=*f*(Vᵢₙ, Vₒᵤₜ)), where Vᵢₙ represents the input voltage of the display screen power supply module, Vₒᵤₜ represents the output voltage of the display screen power supply module, and Ic represents the phase switching current threshold. A storage form of the first correspondence is not limited in this embodiment of this application.

For example, for the electronic device whose display screen power supply module includes n power supply units, there may be a maximum of n power supply groups. If the display screen power supply module is designed to supply power to the display module through m power supply groups in the n power supply groups (where m is a positive integer greater than 1 and less than or equal to n), the first correspondence may be stored in the following Table 1.

**Table 1 First correspondence**

| **Voltage parameter** | | **Phase switching current threshold** | | | |
|---|---|---|---|---|---|
| **Vᵢₙ** | **Vₒᵤₜ** | **I_{1→2}** | **I_{2→3}** | **...** | **I_{(m-1)→m}** |
| ... | | | | | |
| V₁ | V₂ | i₁₋₁ | i₂₋₁ | ... | i₍ₘ₋₁₎₋₁ |
| V₁ | V₃ | i₁₋₂ | i₂₋₂ | ... | i₍ₘ₋₁₎₋₂ |
| V₄ | V₂ | i₁₋₃ | i₂₋₃ | ... | i₍ₘ₋₁₎₋₃ |
| ... | | | | | |

As shown in Table 1, the first correspondence may be a correspondence between the voltage parameter (the input voltage Vᵢₙ and the output voltage Vₒᵤₜ) of the display screen power supply module and the m-1 phase switching current thresholds (I_{1→2}, I_{2→3}, ..., and I_{(m-1)→m}). Corresponding to a group of values of the voltage parameter (the input voltage Vᵢₙ and the output voltage Vₒᵤₜ), there are m-1 phase switching current thresholds corresponding to the group of values in Table 1. Based on Table 1, if the current voltage parameter of the display screen power supply module is "Vᵢₙ=V₁, and Vₒᵤₜ=V₂", m-1 corresponding phase switching current thresholds are respectively i₁₋₁, i₂₋₁, ..., and i₍ₘ₋₁₎₋₁; if the current voltage parameter of the PMIC is "Vᵢₙ=V₁, and Vₒᵤₜ=V₃", m-1 corresponding phase switching current thresholds are respectively i₁₋₂, i₂₋₂, ..., and i₍ₘ₋₁₎₋₂; or if the current voltage parameter of the PMIC is "Vᵢₙ=V₄, and Vₒᵤₜ=V₂", m-1 corresponding phase switching current thresholds are respectively i₁₋₃, i₂₋₃, ..., and i₍ₘ₋₁₎₋₃.

It should be noted that the first correspondence shown in Table 1 is merely an example. In some other embodiments, corresponding to different change ranges of the input voltage and the output voltage of the display screen power supply module in the electronic device, the voltage parameter may include fewer parameters, for example, include only the input voltage Vᵢₙ or the output voltage Vₒᵤₜ. This is not limited herein.

It should be noted that the first correspondence shown in Table 1 may also be implemented by using the foregoing function I_{C}(I_{1→2}, I_{2→3}, ..., I_{(m-1)→m})=*f*(Vᵢₙ, Vₒᵤₜ). For any current voltage parameter, the electronic device may obtain, through calculation based on the function *f*, m-1 corresponding phase switching current thresholds.

In some embodiments, to reduce storage space occupied by the first correspondence, when the first correspondence is established, the input voltage of the display screen power supply module may be divided into M voltage ranges, the output voltage of the display screen power supply module may be divided into N voltage ranges (where M and N may be the same or different), and the voltage ranges are represented by a same voltage value. In this case, there may be M types of input voltages, N types of output voltages, and M×N types of voltage parameter combinations. In this way, a phase switching current threshold corresponding to each of the M×N voltage parameters may be obtained through theoretical calculation, experiments, or the like, and is recorded in the first correspondence.

For example, if the input voltage ranges from 3 V to 4 V, the input voltage may be divided into 10 (M=10) voltage ranges: 3 V to 3.1 V, 3.1 V to 3.2 V, 3.2 V to 3.3 V, 3.3 V to 3.4 V, 3.4 V to 3.5 V, 3.5 V to 3.6 V, 3.6 V to 3.7 V, 3.7 V to 3.8 V, 3.8 V to 3.9 V, and 3.9 V to 4 V, and corresponding voltage values are respectively denoted as 3.1 V, 3.2 V, 3.3 V, 3.4 V, 3.5 V, 3.6 V, 3.7 V, 3.8 V, 3.9 V, and 4 V; or if the output voltage ranges from -4 V to -3 V, the output voltage may be divided into five (N=5) voltage ranges: -4 V to -3.8 V, -3.8 V to -3.6 V, -3.6 V to -3.4 V, -3.4 V to -3.2 V, and -3.2 V to -3 V, and corresponding voltage values are respectively denoted as -3.8 V, -3.6 V, -3.4 V, -3.2 V, and -3 V. In this way, the first correspondence may include 50 groups of phase switching current thresholds corresponding to M×N=50 voltage parameter combinations. In this case, the electronic device may use a phase switching current threshold corresponding to a range of the current voltage parameter as the phase switching current threshold corresponding to the current voltage parameter. For example, if the current voltage parameter is "Vᵢₙ=3.35 V (corresponding to the voltage range: 3.3 V to 3.4 V), and Vᵢₙ=-3.54 V (corresponding to the voltage range: -3.6 V to -3.4 V)", a group of phase switching current thresholds corresponding to 3.4 V and -3.4 V in the first correspondence may be used as the phase switching current threshold corresponding to the current voltage parameter.

During running of the electronic device, the m-1 corresponding phase switching current thresholds may be obtained from Table 1 based on the current voltage parameter of the display screen power supply module, and supply power to the display module through a power supply group with highest power supply efficiency based on a relationship between the current output current of the display screen power supply module and the m-1 obtained phase switching current thresholds.

In some embodiments, during running of the electronic device, when the current output current Iₒᵤₜ of the display screen power supply module increases to I_{j→j+1} (where j is a positive integer less than m), the electronic device may switch to supplying power through the (j+1)^{th} power supply group; and when the current output current Iₒᵤₜ of the display screen power supply module decreases to I_{j→j+1}, the electronic device may switch to supplying power through the j^{th} power supply group. For example, corresponding to the case in which the current voltage parameter of the display screen power supply module is "Vᵢₙ=V₁, and Vₒᵤₜ=V₂", when the current output current of the display screen power supply module increases to i₂₋₁, the electronic device may switch to supplying power to the display module through the 2^{nd} power supply group; and when the current output current of the display screen power supply module decreases to i₂₋₁, the electronic device may switch to supplying power to the display module through the 1^{st} power supply group.

In some embodiments, during running of the electronic device, when the current output current of the display screen power supply module increases to I_{j→j+1}, the electronic device may switch to supplying power through the (j+1)^{th} power supply group; and when the current output current of the display screen power supply module decreases to I_{j→j+1}+ΔI, the electronic device may switch to supplying power through the j^{th} power supply group. ΔI may be referred to as a hysteresis current value. In this way, a phase switching current threshold, used by the display screen power supply module, for switching from the j^{th} power supply group to the (j+1)^{th} power supply group is different from a phase switching current threshold for switching from the (j+1)^{th} power supply group to the j^{th} power supply group, so that a ping-pong effect (for example, a case in which the electronic device switches between the j^{th} power supply group and the (j+1)^{th} power supply group when the current output current is the same as I_{j→j+1}) can be avoided.

For example, corresponding to the case in which the current voltage parameter of the display screen power supply module is "Vᵢₙ=V₁, and Vₒᵤₜ=V₂", when the current output current of the display screen power supply module increases to i₂₋₁, the electronic device may switch to supplying power to the display module through the 2^{nd} power supply group; and when the current output current of the display screen power supply module decreases to i₂₋₁-ΔI, the electronic device may switch to supplying power to the display module through the 1^{st} power supply group.

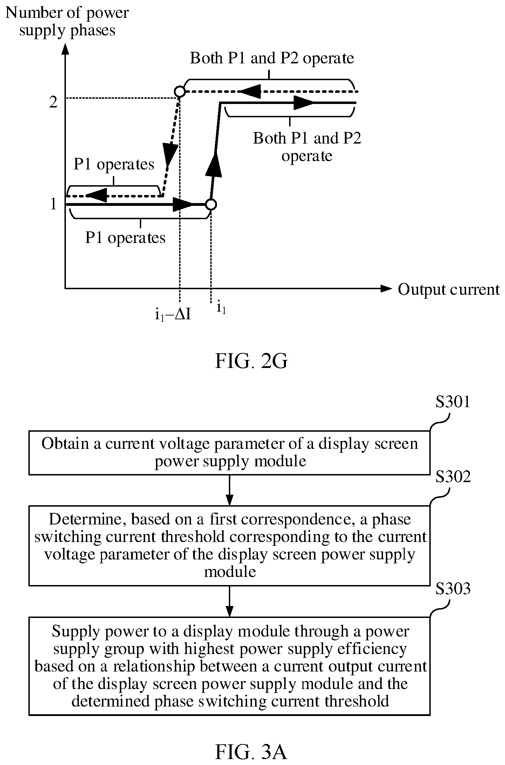

For another example, refer to FIG. 2G. Corresponding to the case in which the current voltage parameter of the PMIC 01 shown in FIG. 2A is "input voltage Vᵢₙ=3.8 V, and output voltage Vₒᵤₜ (ELVSS)=-3 V", the phase switching current threshold I₁₋₂ is i₁. When the current output current of the PMIC 01 is less than i₁, the PMIC supplies power through the one-phase power supply group (for example, the power supply unit P1 operates, and the power supply unit P2 does not operate). When the current output current of the PMIC 01 increases to i₁, the PMIC 01 switches to supplying power through the two-phase power supply group (for example, both the power supply unit P1 and the power supply unit P2 operate). When the current output current of the PMIC 01 is greater than i₂, the PMIC 01 supplies power through the two-phase power supply group; and when the current output current of the PMIC 01 decreases to i₁-ΔI, the PMIC 01 switches to supplying power through the one-phase power supply group.

In some embodiments, the hysteresis current value ΔI may be an empirical value or an experimental value. For example, the hysteresis current value ΔI may be determined based on sampling precision of a component/module that is in the electronic device and that is configured to collect the output current of the display screen power supply module. Lower sampling precision indicates a larger hysteresis current value.

In some embodiments, hysteresis current values corresponding to different phase switching current thresholds may be the same or different. This is not limited herein.

In some embodiments, for the electronic device whose display screen power supply module includes n power supply units, the n power supply units may be power supply units in one PMIC (for example, the display screen power supply module includes one PMIC that has n power supply units), or may be power supply units in different PMICs (for example, the display screen power supply module includes a plurality of PMICs, and there are n power supply units in the plurality of PMICs in total).

In some embodiments, when the electronic device may include a plurality of PMICs, numbers of phases of the plurality of PMICs may be the same or different.

The technical solutions in this application are described below with reference to FIG. 3A to FIG. 11.

For example, FIG. 3A is a schematic flowchart of a power supply method according to some embodiments of this application. As shown in FIG. 3A, the method includes the following steps.

S301: Obtain a current voltage parameter of a display screen power supply module.

During running of an electronic device, the electronic device may obtain the current voltage parameter of the display screen power supply module. The voltage parameter may include at least one of an input voltage and an output voltage.

In some embodiments, a quantity of voltage parameters varies depending on different electronic devices. For example, in an application scenario in which the input voltage of the display screen power supply module is fixed (or the input voltage changes within a small range) and the output voltage changes, the voltage parameter may include the output voltage of the display screen power supply module; in an application scenario in which the output voltage of the display screen power supply module is fixed (or the output voltage changes within a small range) and the input voltage changes, the voltage parameter may include the input voltage of the display screen power supply module; or in an application scenario in which both the input voltage and the output voltage of the display screen power supply module change, the voltage parameter may include the input voltage and the output voltage of the display screen power supply module.

In some embodiments, a circuit, a component, or a module (for example, a coulomb meter or a voltmeter) that can perform voltage detection may be disposed in the electronic device. During running of the electronic device, the electronic device may obtain the current voltage parameter of the display screen power supply module through the voltage detection component or module.

In some embodiments, because there is a correspondence between luminance of a display screen and an ELVSS, the electronic device may store the correspondence between the luminance of the display screen and the ELVSS (referred to as a luminance-ELVSS correspondence below, and also referred to as a second correspondence, which is specifically described below). In this way, the electronic device may obtain the luminance of the display screen (for example, obtain the luminance of the display screen from a processor, a storage, or a display module of the electronic device), and obtain the current voltage parameter of the display screen power supply module based on the luminance-ELVSS correspondence.

It should be noted that, in some other embodiments, the electronic device may alternatively obtain the current voltage parameter of the display screen power supply module in another manner. This is not limited herein.

S302: Determine, based on a first correspondence, a phase switching current threshold corresponding to the current voltage parameter of the display screen power supply module.

After obtaining the current voltage parameter of the display screen power supply module, the electronic device may determine, based on the first correspondence, the phase switching current threshold corresponding to the current voltage parameter of the display screen power supply module.

For example, if the first correspondence is stored in a form like a table, an XML, or a text file, the electronic device directly searches the first correspondence for the phase switching current threshold corresponding to the current voltage parameter. For another example, if the first correspondence is stored by using the foregoing function f, the electronic device may input the current voltage parameter into the function f, to obtain, through calculation, the phase switching current threshold corresponding to the current voltage parameter.

In some embodiments, for the electronic device whose display screen power supply module includes n (where n is a positive integer greater than 1) power supply units, there may be a maximum of n power supply groups, for example, a one-phase power supply group, a two-phase power supply group, ..., and an n-phase power supply group. The electronic device may be designed to supply power to the display module through m power supply groups in the n power supply groups (where m is a positive integer less than or equal to n). There may be m-1 phase switching current thresholds that correspond to the current voltage parameter and that are determined by the electronic device, where a j^{th} (where j is a positive integer less than m) phase switching current threshold is a phase switching current threshold for a j^{th} power supply group and a (j+1)^{th} power supply group, which is denoted as I_{j→j+1}.

In some embodiments, the first correspondence may be stored in the storage of the electronic device, for example, a flash storage, a memory, a cache, or a register of the processor. A storage location of the first correspondence is not limited in this embodiment of this application.

S303: Supply power to the display module through a power supply group with highest power supply efficiency based on a relationship between a current output current of the display screen power supply module and the determined phase switching current threshold.

After obtaining the phase switching current threshold corresponding to the current voltage parameter of the display screen power supply module, the electronic device may supply power to the display module through the power supply group with the highest power supply efficiency based on the relationship between the current output current of the display screen power supply module and the determined phase switching current threshold.

For example, when the current output current Iₒᵤₜ of the display screen power supply module increases to I_{j→j+1} (where j is a positive integer less than m), the electronic device may switch to supplying power through the (j+1)^{th} power supply group; and when the current output current Iₒᵤₜ of the display screen power supply module decreases to I_{j→j+1} (or I_{j→j+1}-ΔI), the electronic device may switch to supplying power through the j^{th} power supply group.

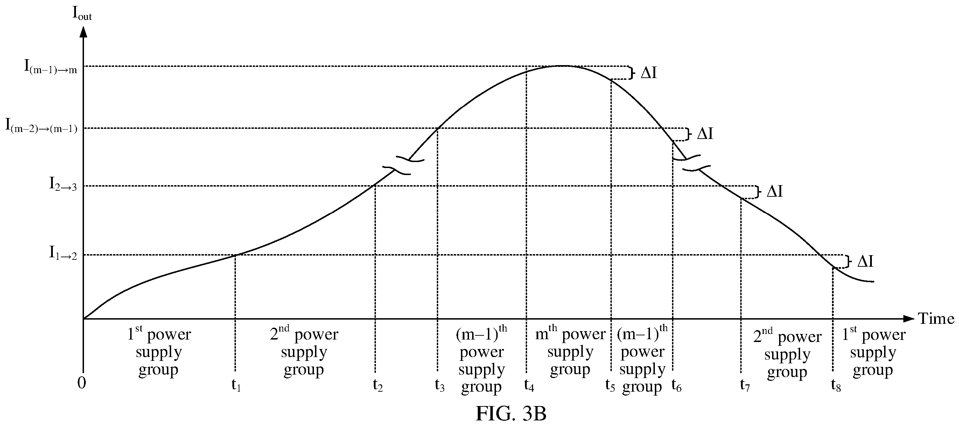

For example, FIG. 3B is a diagram of a power supply group used during a change of an output current of a display screen power supply module according to some embodiments of this application.

As shown in FIG. 3B, the output current Iₒᵤₜ of the display screen power supply module gradually increases from a moment 0, increases to I_{1→2} at a moment t₁, increases to I_{2→3} at a moment t₂, ..., increases to I_{(m-2)→(m-1)} at a moment t₃, and increases to I_{(m-1)→m} at a moment t₄; and the output current Iₒᵤₜ gradually decreases after reaching a largest value, decreases to I_{(m-1)→m}-ΔI at a moment t₅, decreases to I_{(m-1)→m}-ΔI at a moment t₆, ..., decreases to I_{2→3}-ΔI at a moment t₇, and decreases to I_{1→2}-ΔI at a moment t₈. The display screen power supply module may supply power through a 1^{st} power supply group from the moment 0, switch to supplying power through a 2^{nd} power supply group at the moment t₁, switch to supplying power through a 3^{rd} power supply group at the moment t₂, switch to supplying power through an (m-1)^{th} power supply group at the moment t₃, switch to supplying power through an m^{th} power supply group at the moment t₄, switch to supplying power through the (m-1)^{th} power supply group at the moment t₅, switch to supplying power through an (m-2)^{th} power supply group at the moment t₆, switch to supplying power through the 2^{nd} power supply group at the moment t₇, and switch to supplying power through the 1^{st} power supply group at the moment t₈.

For example, when the current output current Iₒᵤₜ of the display screen power supply module is less than or equal to I_{1→2}, the electronic device may supply power through the 1^{st} power supply group; in a case in which j is less than m-1, when the current output current Iₒᵤₜ is greater than I_{j→j+1} and less than or equal to I_{j→j+2}, the electronic device may supply power through the (j+1)^{th} power supply group; and when the current output current Iₒᵤₜ is greater than I_{(m-1)→m}, the electronic device may supply power through the m^{th} power supply group.

For example, when the current output current Iₒᵤₜ of the display screen power supply module is less than or equal to I_{1→2}, the electronic device may supply power through the 1^{st} power supply group; in a case in which j is less than m-1, when the current output current Iₒᵤₜ is greater than I_{j→j+1} and less than or equal to I_{j→j+2}, the electronic device may supply power through the (j+1)^{th} power supply group; and when the current output current Iₒᵤₜ is greater than I_{(m-1)→m}, the electronic device may supply power through the m^{th} power supply group.

For example, in a case in which the current output current Iₒᵤₜ of the display screen power supply module tends to increase, when the current output current Iₒᵤₜ of the display screen power supply module is less than or equal to I_{1→2}, the electronic device may supply power through the 1^{st} power supply group; in a case in which j is less than m-1, when the current output current Iₒᵤₜ is greater than I_{j→j+1} and less than or equal to I_{j→j+2}, the electronic device may supply power through the (j+1)^{th} power supply group; and when the current output current Iₒᵤₜ is greater than I_{(m-1)→m}, the electronic device may supply power through the m^{th} power supply group. In a case in which the current output current Iₒᵤₜ of the display screen power supply module tends to decrease, when the current output current Iₒᵤₜ of the display screen power supply module is less than or equal to I_{1→2}-ΔI, the electronic device may supply power through the 1^{st} power supply group; in a case in which j is less than m-1, when the current output current Iₒᵤₜ is greater than I_{j→j+1}-ΔI and less than or equal to I_{j→j+2}-ΔI, the electronic device may supply power through the (j+1)^{th} power supply group; and when the current output current Iₒᵤₜ is greater than I_{(m-1)→m}-ΔI, the electronic device may supply power through the m^{th} power supply group.

In some embodiments, a register (referred to as a phase switching current threshold register below) configured to store a phase switching current threshold corresponding to each power supply group is disposed in a PMIC in the display screen power supply module, and the PMIC may supply power to the display screen module through a power supply group with highest power supply efficiency based on a relationship between the output current of the display screen power supply module and each phase switching current threshold register. The electronic device may write the determined phase switching current threshold into the phase switching current threshold register in the PMIC, so that the PMIC can supply power to the display module through a power supply group with highest power supply efficiency based on a relationship between the output current of the display screen power supply module and the determined phase switching current threshold. Details are described below, and are not repeated herein.

In some embodiments, no phase switching current threshold register is disposed in the PMIC in the display screen power supply module, but the PMIC may receive a control signal sent by another module (for example, the processor), and adjust a number of power supply phases of the PMIC. The electronic device may determine, based on the relationship between the output current of the display screen power supply module and the determined phase switching current threshold, a number of power supply phases corresponding to the power supply group with the highest power supply efficiency. Then, the processor of the electronic device may send a control signal to the PMIC in the display screen power supply module, so that the PMIC can supply power to the display module based on the number of power supply phases corresponding to the power supply group with the highest power supply efficiency. Details are described below, and are not repeated herein.

According to the foregoing method, the phase switching current threshold in the display screen power supply module in the electronic device may match the current voltage parameter of the display screen power supply module. This helps improve power supply efficiency of the display screen power supply module.

In some embodiments, the electronic device may repeat step S301 to step S303, to ensure that when the voltage parameter of the display screen power supply module changes, the electronic device can determine, in a timely manner, a phase switching current threshold corresponding to a changed voltage parameter. Then, the electronic device may adjust, based on the phase switching current threshold corresponding to the changed voltage parameter and the output current of the display screen power supply module, the number of power supply phases that is for supplying power to the display module, to supply power to the display module through a power supply group with highest power supply efficiency.

It should be noted that content in step S301 to step S303 may be performed by a same module (for example, a same processor or PMIC) in the electronic device, or may be cooperatively performed by different modules (for example, the processor determines the phase switching current threshold, and the PMIC supplies power to the display module through a power supply group with highest power supply efficiency based on the current output current of the display screen power supply module and the phase switching current threshold). This is not limited herein.

With reference to the accompanying drawings, the technical solutions of this application are described below based on different specific manners for switching a number of phases by the display screen power supply module.

**Manner 1: When a phase switching current threshold register is disposed in the PMIC in the display screen power supply module, the PMIC may supply power to the display module through a power supply group with highest power supply efficiency based on a relationship between the current output current of the display screen power supply module and a phase switching current threshold stored in the phase switching current threshold register.**

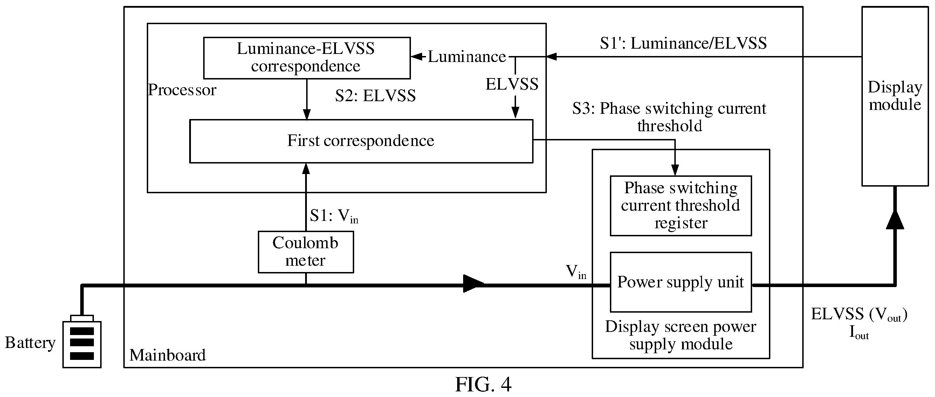

For example, FIG. 4 is a schematic flowchart of a power supply method according to some embodiments of this application.

As shown in FIG. 4, a processor, a coulomb meter, and a display screen power supply module are disposed on a mainboard of an electronic device, a battery is configured to supply power to the display screen power supply module, and the display screen power supply module is configured to provide an ELVSS for a display module. The coulomb meter is configured to detect a supply voltage of the battery (equivalent to an input voltage of the display screen power supply module). The display screen power supply module includes one or more PMICs, and the one or more PMICs each include a plurality of power supply units and phase switching current threshold registers. The PMIC in the display screen power supply module may switch, based on a relationship between a phase switching current threshold stored in the phase switching current threshold register and an output current Iₒᵤₜ of the display screen power supply module, a number of phases at which the display screen power supply module supplies power to the display module, so that the display screen power supply module can supply power to the display module through a power supply group with highest power supply efficiency.

Still refer to FIG. 4. The power supply method may include the following steps.

S1: The processor obtains a current input voltage Vᵢₙ of the display screen power supply module from the coulomb meter.

During running of the electronic device, the processor may obtain the supply voltage of the battery from the coulomb meter, and use the supply voltage of the battery as the current input voltage Vᵢₙ of the display screen power supply module, that is, a current input voltage of the PMIC in the display screen power supply module.

In some other embodiments, alternatively, the coulomb meter may directly measure a voltage value at an input voltage pin of the PMIC, and use the measured voltage as the input voltage of the display screen power supply module.

S1': The processor obtains the ELVSS or luminance of a display screen from the display module.

The processor may obtain the ELVSS (as a current output voltage of the display screen power supply module/the PMIC in the display screen power supply module) from the display module, or the processor may obtain the luminance of the display screen from the display module and obtain the ELVSS (as a current output voltage of the PMIC) based on a luminance-ELVSS correspondence.

For example, a luminance-ELVSS correspondence is shown in Table 2.

**Table 2 Luminance-ELVSS correspondence**

| Luminance | ELVSS |
|---|---|
| ... | ... |
| L₁ | V_{E-1} |
| L₂ | V_{E-2} |
| ... | ... |

As shown in Table 2, values of the ELVSS corresponding to different values of the luminance are recorded in the luminance-ELVSS correspondence. For example, when the luminance of the display screen is L₁, the ELVSS is V_{E-1}; or when the luminance of the display screen is L₂, the ELVSS is V_{E-2}. The processor may determine, from the luminance-ELVSS correspondence based on the luminance (for example, L₁) of the display screen, that a current ELVSS of the display screen is V_{E-1}, so as to determine that the current output voltage of the display screen power supply module is V_{E-1}.

In some embodiments, the luminance of the display screen is determined and configured by the processor based on a user operation or running logic of the processor. Alternatively, the processor may not obtain the ELVSS or the luminance of the display screen from the display module, but obtain the ELVSS or the luminance of the display screen from a storage in the processor or another storage (for example, a memory of the electronic device or a storage in another processor). This is not limited herein.

It should be noted that step S1 and step S1' may be performed in parallel, or step S1' may be performed before step S1, or step S1 may be performed before step S1'. This is not limited herein.

S2: The processor determines a phase switching current threshold based on the current input voltage Vᵢₙ, the ELVSS, and a first correspondence.

After obtaining a current voltage parameter (the current input voltage Vᵢₙ and the current output voltage Vₒᵤₜ (ELVSS)) of the display screen power supply module, the processor may determine, based on the current voltage parameter and the first correspondence, a phase switching current threshold that matches the current voltage parameter.

S3: The processor writes the phase switching current threshold into the current threshold register.

After obtaining the phase switching current threshold, the processor may write each phase switching current threshold into a corresponding phase switching current threshold register in the PMIC via an inter-integrated circuit (inter-integrated circuit, I2C) bus or another communication bus.

After the phase switching current threshold is written into the phase switching current threshold register, the PMIC may adjust, based on the relationship between an output current Iₒᵤₜ of the PMIC and the phase switching current threshold in the phase switching current threshold register, the number of phases that is for supplying power to the display module, to supply power to the display module through a power supply group with highest power supply efficiency.

For example, in a case in which the display screen power supply module is designed to supply power to the display module through m power supply groups in n power supply groups (1<m≤n), there may be m-1 phase switching current threshold registers, and a j^{th} phase switching current threshold register in the PMIC is configured to store the phase switching current threshold I_{j→j+1} that is for the j^{th} power supply group and the (j+1)^{th} power supply group. When a current output current Iₒᵤₜ of the display screen power supply module increases to a value in the j^{th} phase switching current threshold register, the PMIC switches to supplying power to the display module through the (j+1)^{th} power supply group; and when the current output current Iₒᵤₜ of the display screen power supply module decreases to a value in the j^{th} phase switching current threshold register (or a difference obtained by subtracting a hysteresis current value from a value in the j^{th} phase switching current threshold register), the PMIC switches to supplying power to the display module through the j^{th} power supply group.

For ease of understanding, the technical solutions of this application are separately described below by using a case in which n power supply units in the display screen power supply module are power supply units in a same PMIC and a case in which n power supply units are power supply units in different PMICs.

Case 1: n power supply units in the display screen power supply module are power supply units in a same PMIC.

In some embodiments, the display screen power supply module in the electronic device may include one PMIC, the PMIC may include n power supply units, the n power supply units correspond to the n power supply groups, and the PMIC is designed to supply power to the display module through the n power supply groups (that is, the n power supply units may be separately turned on or turned off). The j^{th} power supply group is a j-phase power supply group. In the foregoing case, the PMIC may include n-1 phase switching current threshold registers, and a j^{th} phase switching current threshold register is configured to store the phase switching current threshold I_{j→j+1} that is for switching from the j^{th} power supply group to the (j+1)^{th} power supply group. When the current output current of the display screen power supply module increases to a value in the j^{th} phase switching current threshold register, the PMIC may switch to supplying power to the display module through the (j+1)^{th} power supply group; and when the current output current of the display screen power supply module decreases to a value in the j^{th} phase switching current threshold register (or a difference obtained by subtracting a hysteresis current value from a value in the j^{th} phase switching current threshold register), the PMIC may switch to supplying power to the display module through the j^{th} power supply group.

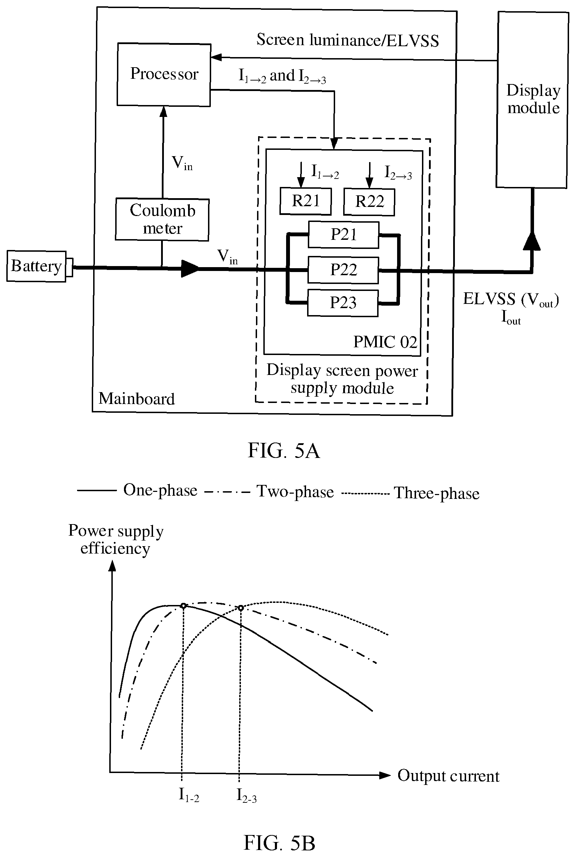

For example, refer to FIG. 5A. The display screen power supply module in the electronic device includes a PMIC 02, a phase switching current threshold register R21, and a phase switching current threshold register R22. The PMIC 02 includes a power supply unit P21, a power supply unit P22, and a power supply unit P23.

Running logic of the PMIC 02 is as follows:

When the display screen power supply module is powered on, the PMIC 02 supplies power through a one-phase power supply group (for example, the power supply unit P21 supplies power, and the power supply unit P22 and the power supply unit P23 do not operate);
when detecting that the output current Iₒᵤₜ of the display screen power supply module increases to a current value in the phase switching current threshold register R21, the PMIC 02 switches to supplying power through a two-phase power supply group (for example, the power supply unit P21 and the power supply unit P22 supply power, and the power supply unit P23 does not supply power);
when detecting that the output current Iₒᵤₜ of the display screen power supply module increases to a current value in the phase switching current threshold register R22, the PMIC 02 switches to supplying power through a three-phase power supply group (for example, all the power supply unit P21, the power supply unit P22 supply power, and the power supply unit P23 supply power);
when detecting that the output current Iₒᵤₜ of the display screen power supply module decreases to a current value in the phase switching current threshold register R22 (or a difference obtained by subtracting a hysteresis current value ΔI from a current value in the phase switching current threshold register R22), the PMIC 02 switches to supplying power through the two-phase power supply group; and
when detecting that the output current Iₒᵤₜ of the display screen power supply module decreases to a current value in the phase switching current threshold register R21 (or a difference obtained by subtracting a hysteresis current value ΔI from a current value in the phase switching current threshold register R21), the PMIC 02 switches to supplying power through the one-phase power supply group.

For the PMIC 02 shown in FIG. 5A, a correspondence between the output current Iₒᵤₜ and power supply efficiency corresponding to a case in which the PMIC supplies power through different power supply groups with different numbers of phases at different voltage parameters may be obtained through theoretical calculation, experimental measurement, or the like, so that phase switching current thresholds at the different voltage parameters are determined, to obtain the first correspondence, namely, a correspondence between a voltage parameter of the PMIC 02 and a phase switching current threshold I_{1→2} and a phase switching current threshold I_{2→3}. For example, refer to FIG. 5B. At a voltage parameter, an output current I₁₋₂ corresponding to an intersection point between a power supply efficiency curve of the one-phase power supply group and a power supply efficiency curve of the two-phase power supply group of the PMIC 02 may be used as a phase switching current threshold I_{1→2} at the voltage parameter, and an output current I₂₋₃ corresponding to an intersection point between the power supply efficiency curve of the two-phase power supply group and a power supply efficiency curve of the three-phase power supply group may be used as a phase switching current threshold I_{2→3} at the voltage parameter.

Based on the running logic, the electronic device may pre-store the first correspondence, for example, store the first correspondence in the processor or another storage of the electronic device. During running of the electronic device, the processor may obtain a current voltage parameter of the PMIC 02 (for example, obtain the voltage of the battery (as a current input voltage of the PMIC 02) through the coulomb meter; and obtain the screen luminance of the display screen from the display module, and determine the ELVSS based on the foregoing luminance-ELVSS correspondence (or directly obtain the ELVSS from the display module) (as a current output voltage of the PMIC 02). Then, the processor may determine, from the first correspondence based on the current voltage parameter of the PMIC 02, the phase switching current threshold I_{1→2} and the phase switching current threshold I_{2→3} that match the current voltage parameter, and write the phase switching current threshold I_{1→2} into the phase switching current threshold register R21 and write the phase switching current threshold I_{2→3} into the phase switching current threshold register R22. In this way, the PMIC 02 may adjust, based on the running logic and a relationship between a current output current Iₒᵤₜ of the PMIC 02 and the phase switching current thresholds stored in the phase switching current threshold register R21 and the phase switching current threshold register R22, the number of phases that is for supplying power to the display module.

In some embodiments, the PMIC 02 may further include a phase switching current threshold register R23 (not shown) and a phase switching current threshold register R24 (not shown), which are respectively configured to store a difference obtained by subtracting a hysteresis current value ΔI from the phase switching current threshold I_{1→2} and a difference obtained by subtracting a hysteresis current value ΔI from the phase switching current threshold I_{2→3}. The PMIC 02 may switch to supplying power through the two-phase power supply group when the output current Iₒᵤₜ decreases to a current value in the phase switching current threshold register R24; or switch to supplying power through the one-phase power supply group when the output current Iₒᵤₜ decreases to a current value in the phase switching current threshold register R23.

**Case 2: n power supply units in the display screen power supply module are power supply units in different PMICs.**

In some embodiments, the display screen power supply module in the electronic device may include p PMICs, the p PMICs include n power supply units in total (for example, each PMIC includes n/p power supply units). The n power supply units correspond to the n power supply groups, and the PMIC is designed to supply power to the display module through the m power supply groups, where the p PMICs include one primary PMIC and p-1 secondary PMICs. The primary PMIC may send a control signal (a power supply stop signal, a power supply signal (for example, a signal for supplying power through a specific quantity of power supply units), or the like) to the secondary PMIC via the I2C or the like. After receiving the control signal, each secondary PMIC may turn off/on a power supply unit of the secondary PMIC based on the control signal.

In some embodiments, the primary PMIC may include m-1 phase switching current threshold registers, and a j^{th} phase switching current threshold register is configured to store the phase switching current threshold I_{j→j+1} that is for switching from the j^{th} power supply group to the (j+1)^{th} power supply group. When the current output current of the display screen power supply module (a total current of the p PMICs) increases to a value in the j^{th} phase switching current threshold register, the primary PMIC may send a control signal to at least one secondary PMIC corresponding to the (j+1)^{th} power supply group, so that the primary PMIC and the at least one secondary PMIC can supply power to the display module through the (j+1)^{th} power supply group. When the current total output current of the display screen power supply module decreases to a value in the j^{th} phase switching current threshold register (or a difference obtained by subtracting a hysteresis current value from a value in the j^{th} phase switching current threshold register), the primary PMIC may send a control signal to at least one secondary PMIC corresponding to the j^{th} power supply group, so that the primary PMIC and the at least one secondary PMIC can supply power to the display module through the j^{th} power supply group. In some embodiments, when a plurality of power supply units supply power to a load, values of currents output by the power supply units are usually the same (or slightly different). The primary PMIC may use a product of a current output current of one power supply unit of the primary PMIC and a quantity of power supply units that are in the display screen power supply module and that are currently supplying power as a current output current of the display screen power supply module.

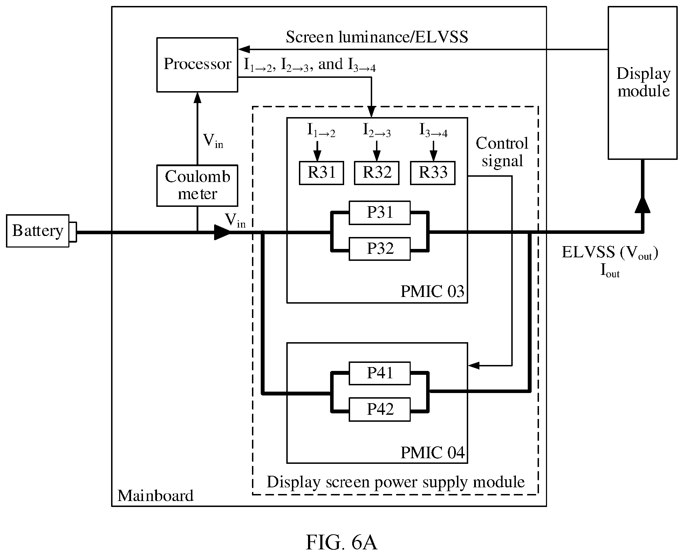

For example, m may be equal to n. In this case, the n power supply units may be independently turned off or turned on. For example, refer to FIG. 6A. The display screen power supply module in the electronic device includes a PMIC 03 (serving as a primary power supply unit) and a PMIC 04 (serving as a secondary power supply unit). The PMIC 03 includes a power supply unit P31, a power supply unit P32, a phase switching current threshold register R31, a phase switching current threshold register R32, and a phase switching current threshold register R33. The PMIC 04 includes a power supply unit P41 and a power supply unit P42. All the power supply unit P31, the power supply unit P32, the power supply unit P41, and the power supply unit P42 may be independently turned on or turned off. In the foregoing case, it is equivalent to that n=m=4 and p=2. In other words, the display screen power supply module includes four power supply groups, and a 1^{st} power supply group to a 4^{th} power supply group are respectively a one-phase power supply group, a two-phase power supply group, a three-phase power supply group, and a four-phase power supply group. The phase switching current threshold register R31 is configured to store a phase switching current threshold I_{1→2} for the 1^{st} power supply group and the 2^{nd} power supply group, the phase switching current threshold register R32 is configured to store a phase switching current threshold I_{2→3} for the 2^{nd} power supply group and the 3^{rd} power supply group, and the phase switching current threshold register R33 is configured to store a phase switching current threshold I_{3→4} for the 3^{rd} power supply group and the 4^{th} power supply group.

Running logic of the PMIC 03 and the PMIC 04 is as follows:

When the display screen power supply module is powered on, the PMIC 03 supplies power through the power supply unit P31, and the PMIC 04 does not supply power, that is, the display screen power supply module supplies power through the one-phase power supply group (the power supply unit P31);
when detecting that the current output current Iₒᵤₜ of the display screen power supply module increases to a current value in the phase switching current threshold register R31, the PMIC 03 switches to supplying power through the power supply unit P31 and the power supply unit P32, that is, the display screen power supply module supplies power through the two-phase power supply group (the power supply unit P31 and the power supply unit P32);
when detecting that the current output current Iₒᵤₜ of the display screen power supply module increases to a current value in the phase switching current threshold register R32, the PMIC 03 sends, to the PMIC 04, a control signal for turning on one power supply unit, so that the power supply unit P41 of the PMIC 04 supplies power and the power supply unit P42 does not supply power, that is, the display screen power supply module supplies power through the three-phase power supply group (the power supply unit P31, the power supply unit P32, and the power supply unit P41);
when detecting that the current output current Iₒᵤₜ of the display screen power supply module increases to a current value in the phase switching current threshold register R33, the PMIC 03 sends, to the PMIC 04, a control signal for turning on two power supply unit, so that the power supply unit P41 and the power supply unit P42 of the PMIC 04 supply power, that is, the display screen power supply module supplies power through the four-phase power supply group (the power supply unit P31, the power supply unit P32, the power supply unit P41, and the power supply unit P42);
when detecting that the current output current Iₒᵤₜ of the display screen power supply module decreases to a current value in the phase switching current threshold register R33 (or a difference obtained by subtracting a hysteresis current value ΔI from a current value in the phase switching current threshold register R33), the PMIC 03 sends, to the PMIC 04, a control signal for turning on one power supply unit, so that the power supply unit P41 of the PMIC 04 supplies power and the power supply unit P42 does not supply power, that is, the display screen power supply module supplies power through the three-phase power supply group;
when detecting that the current output current Iₒᵤₜ of the display screen power supply module decreases to a current value in the phase switching current threshold register R32 (or a difference obtained by subtracting a hysteresis current value ΔI from a current value in the phase switching current threshold register R32), the PMIC 03 sends, to the PMIC 04, a control signal for stopping power supply, so that the power supply unit P41 and the power supply unit P42 of the PMIC 04 do not supply power, that is, the display screen power supply module supplies power through the two-phase power supply group; and
when detecting that the current output current Iₒᵤₜ of the display screen power supply module decreases to a current value in the phase switching current threshold register R31 (or a difference obtained by subtracting a hysteresis current value ΔI from a current value in the phase switching current threshold register R31), the PMIC 03 controls the power supply unit P31 to supply power and controls the power supply unit P32 not to supply power, that is, the display screen power supply module supplies power through the one-phase power supply group.

Based on the running logic, the electronic device may pre-store the first correspondence, for example, store the first correspondence in the processor or another storage of the electronic device. During running of the electronic device, the processor may determine the current voltage parameter (the current input voltage Vᵢₙ and the current output voltage Vₒᵤₜ (ELVSS)) of the display screen power supply module in real time, and determine, from the first correspondence based on the current voltage parameter, a phase switching current threshold I_{1→2}, a phase switching current threshold I_{2→3}, and a phase switching current threshold I_{3→4} that correspond to the current voltage parameter. Then, the processor may respectively write determined I_{1→2}, I_{2→3}, and I_{3→4} into the phase switching current threshold register R31, the phase switching current threshold register R32, and the phase switching current threshold register R33. In addition, the PMIC 03 and the PMIC 04 may adjust, based on the running logic, a quantity of power supply units that supply power to the display module, so that the display screen power supply module can supply power to the display module through a power supply group with highest efficiency.

For example, m may be an integer less than n. In other words, at least two of the n power supply units can only be simultaneously turned off or turned on. For example, a power supply unit in the primary PMIC can be independently turned off or turned on, and a power supply unit in each secondary PMIC can only be simultaneously turned off or turned on. Assuming that a quantity of power supply units in the primary PMIC and a quantity of power supply units in the secondary PMIC are equal (that is, both are n/p), the m power supply groups corresponding to the display screen power supply module may be a one-phase power supply group, a two-phase power supply group, ..., an n/p-phase power supply group, a 2n/p-phase power supply group, ..., and an n-phase power supply group, that is, m=p-1+n/p. When j≤n/p, the j^{th} power supply group in the m power supply groups is a j-phase power supply group. When n/p<j≤m, the j^{th} power supply group in the m power supply groups is a (j-n/p+1)×n/p-phase power supply group.

When j≤n/p, when the current output current Iₒᵤₜ of the display screen power supply module increases to a current value (I_{j→j+1}) in the j^{th} phase switching current threshold register, the primary PMIC may control the primary PMIC to supply power through j+1 power supply units, and control the secondary PMIC not to supply power; and when the output current Iₒᵤₜ of the display screen power supply module decreases to a current value (I_{j→j+1}) in the j^{th} phase switching current threshold register (or a difference I_{j→j+1}-ΔI obtained by subtracting the phase switching current threshold from a current value in the j^{th} phase switching current threshold register), the primary PMIC may control the primary PMIC to supply power through j power supply units, and control the secondary PMIC not to supply power.

When n/p<j<m, when the output current Iₒᵤₜ of the display screen power supply module increases to a current value (I_{j→j+1}) in the j^{th} phase switching current threshold register, the primary PMIC may control the primary PMIC and j-n/p+1 secondary PMICs to supply power; and when the output current Iₒᵤₜ of the display screen power supply module decreases to a current value (I_{j→j+1}) in the j^{th} phase switching current threshold register (or a difference I_{j→j+1}-ΔI obtained by subtracting the phase switching current threshold from a current value in the j^{th} phase switching current threshold register), the primary PMIC may send power supply control signals to j-n/p secondary PMICs, so that the primary PMIC and the j-n/p secondary PMICs can supply power through all power supply units in the primary PMIC and the j-n/p secondary PMICs.

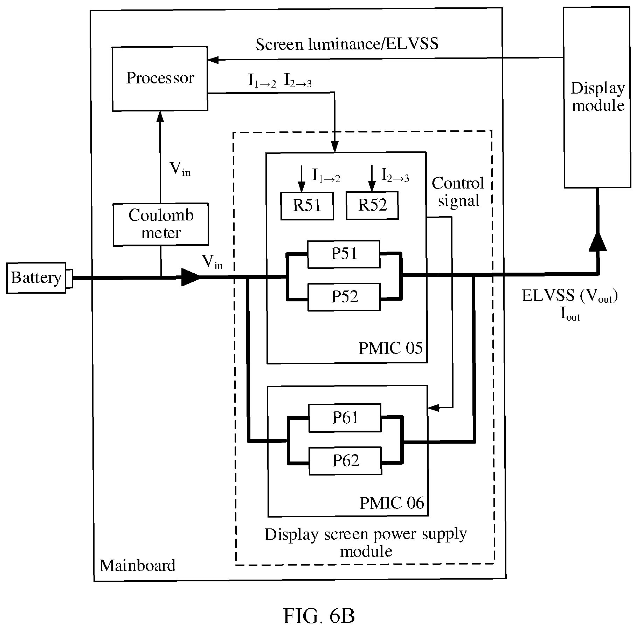

For example, refer to FIG. 6B. The display screen power supply module in the electronic device includes a PMIC 05 (serving as a primary PMIC) and a PMIC 06 (serving as a secondary PMIC). The PMIC 05 includes a power supply unit P51, a power supply unit P52, a phase switching current threshold register R51, and a phase switching current threshold register R52. The PMIC 06 includes a power supply unit P61 and a power supply unit P62. The power supply unit P51 and the power supply unit P52 may be independently turned on or off. The power supply unit P61 and the power supply unit P62 can only be simultaneously turned on or turned off. In the foregoing case, it is equivalent to that n=4, m=3, and p=2. In other words, the display screen power supply module includes three power supply groups, and a 1^{st} power supply group to a 3^{rd} power supply group are respectively a one-phase power supply group, a two-phase power supply group, and a four-phase power supply group (that is, (j-n/p+1)×n/p=(3-4/2+1)×2=4). The phase switching current threshold register R51 is configured to store a phase switching current threshold I_{1→2} for the 1^{st} power supply group (the one-phase power supply group) and the 2^{nd} power supply group (the two-phase power supply group), and the phase switching current threshold register R52 is configured to store a phase switching current threshold I_{2→3} for the 2^{nd} power supply group and the 3^{rd} power supply group (the four-phase power supply group).

Running logic of the PMIC 05 and the PMIC 06 is as follows:
When the display screen power supply module is powered on, the PMIC 05 supplies power through the power supply unit P51, and the PMIC 06 does not supply power, that is, the display screen power supply module supplies power through the one-phase power supply group (the power supply unit P51);
when detecting that the current output current Iₒᵤₜ of the display screen power supply module increases to a current value in the phase switching current threshold register R51, the PMIC 05 switches to supplying power through the power supply unit P51 and the power supply unit P52, that is, the display screen power supply module supplies power through the two-phase power supply group (the power supply unit P51 and the power supply unit P52);
when detecting that the current output current Iₒᵤₜ of the display screen power supply module increases to a current value in the phase switching current threshold register R52, the PMIC 05 sends, to the PMIC 06, a control signal for turning on two power supply unit, so that the power supply unit P61 and the power supply unit P62 of the PMIC 06 supply power, that is, the display screen power supply module supplies power through the four-phase power supply group (the power supply unit P51, the power supply unit P52, the power supply unit P61, and the power supply unit P62);
when detecting that the current output current Iₒᵤₜ of the display screen power supply module decreases to a current value in the phase switching current threshold register R52 (or a difference obtained by subtracting a hysteresis current value ΔI from a current value in the phase switching current threshold register R52), the PMIC 05 sends, to the PMIC 06, a control signal for stopping power supply, so that the power supply unit P61 and the power supply unit P62 of the PMIC 06 do not supply power, that is, the display screen power supply module supplies power through the two-phase power supply group; and
when detecting that the current output current Iₒᵤₜ of the display screen power supply module decreases to a current value in the phase switching current threshold register R51 (or a difference obtained by subtracting a hysteresis current value ΔI from a current value in the phase switching current threshold register R51), the PMIC 05 controls the power supply unit P51 to supply power and controls the power supply unit P52 not to supply power, that is, the display screen power supply module supplies power through the one-phase power supply group.

Based on the running logic, the electronic device may pre-store the first correspondence, for example, store the first correspondence in the processor or another storage of the electronic device. During running of the electronic device, the processor may determine the current voltage parameter (the current input voltage Vᵢₙ and the current output voltage Vₒᵤₜ (ELVSS)) of the display screen power supply module in real time, and determine, from the first correspondence based on the current voltage parameter, a phase switching current threshold I_{1→2} and a phase switching current threshold I_{2→3} that correspond to the current voltage parameter. Then, the processor may respectively write determined I_{1→2} and I_{2→3} into the phase switching current threshold register R51 and the phase switching current threshold register R52. In addition, the PMIC 05 and the PMIC 06 may adjust, based on the running logic, a quantity of power supply units that supply power to the display module, so that the display screen power supply module can supply power to the display module through a power supply group with highest efficiency.

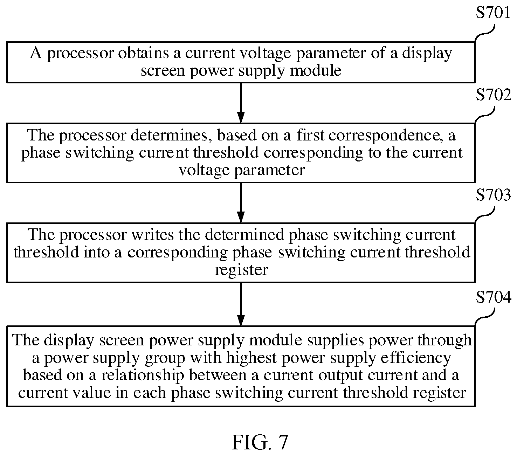

Refer to FIG. 7. An embodiment of this application provides a power supply method based on the embodiments shown in FIG. 4 to FIG. 6B. The method includes the following steps.

S701: A processor obtains a current voltage parameter of a display screen power supply module.

During running of the processor of an electronic device, the processor may obtain the current voltage parameter of the display screen power supply module. The voltage parameter may include one or both of an input voltage and an output voltage.

For example, the electronic device may measure the input voltage and the output voltage of the display screen power supply module through a component/module like a coulomb meter/voltmeter that can measure a voltage. For another example, the electronic device may obtain luminance of a display screen of the electronic device, and determine the output voltage (namely, an ELVSS) of the display screen power supply module based on the foregoing luminance-ELVSS correspondence. For another example, the electronic device may measure a supply voltage of a battery of the electronic device through a component/module like a coulomb meter/voltmeter that can measure a voltage, and use the supply voltage of the battery as the input voltage of the display screen power supply module.

In some other embodiments, the processor of the electronic device may alternatively obtain the current voltage parameter of the display screen power supply module in another manner. This is not limited herein.

S702: The processor determines, based on a first correspondence, a phase switching current threshold corresponding to the current voltage parameter.

For example, the electronic device may store the first correspondence between a voltage parameter and a phase switching current threshold. After obtaining the current voltage parameter of the display screen power supply module, the processor of the electronic device may determine, based on the first correspondence, the phase switching current threshold corresponding to the current voltage parameter.

In some embodiments, corresponding to a case in which the display screen power supply module includes n power supply units, and the display screen power supply module is designed to supply power to a display module through m power supply groups in n power supply groups corresponding to the n power supply units, a voltage parameter in the first correspondence corresponds to m-1 phase switching current thresholds.

S703: The processor writes the determined phase switching current threshold into a corresponding phase switching current threshold register.

After determining the phase switching current threshold corresponding to the current voltage parameter, the electronic device may write the determined phase switching current threshold into the corresponding phase switching current threshold register.

S704: The display screen power supply module supplies power through a power supply group with highest power supply efficiency based on a relationship between a current output current and a current value in each phase switching current threshold register.

After the phase switching current threshold is written into the phase switching current threshold register, the display screen power supply module may supply power through the power supply group with the highest power supply efficiency based on running logic of the display screen power supply module and the relationship between the current output current and the current value in each phase switching current threshold register. For details, refer to the foregoing embodiments in FIG. 4 to FIG. 6B. The details are not described herein again.

According to the foregoing method, the phase switching current threshold in the display screen power supply module in the electronic device may match the voltage parameter of the display screen power supply module. This helps improve power supply efficiency of the display screen power supply module.

**Manner 2: No phase switching current threshold register is disposed in the PMIC in the display screen power supply module, and the processor of the electronic device first determines a power supply group with highest power supply efficiency based on the relationship between the current output current of the display screen power supply module and the phase switching current threshold, and sends a control signal to the PMIC, so that the PMIC can supply power to the display module through the power supply group with the highest power supply efficiency.**

Compared with the embodiments in FIG. 4 to FIG. 7, in this embodiment, no phase switching current threshold register may be disposed in the PMIC in the display screen power supply module. The PMIC in the display screen power supply module may receive a control signal sent by another module (for example, the processor), and adjust a number of power supply phases of the PMIC. In this case, the processor of the electronic device may obtain the current voltage parameter and the current output current of the display screen power supply module, and send a control signal to the PMIC in the display screen power supply module based on a relationship between the current output current and the phase switching current threshold corresponding to the current voltage parameter, so that the display screen power supply module can supply power to the display module through a power supply group with highest efficiency.

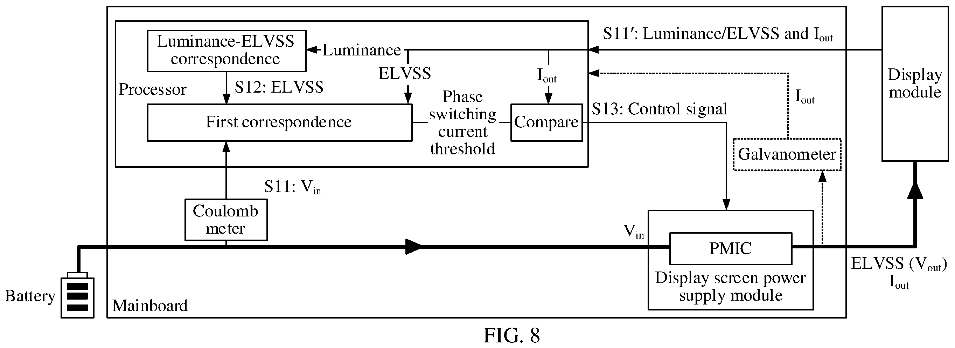

For example, FIG. 8 is a schematic flowchart of a power supply method according to some embodiments of this application.

S11: A processor obtains a current input voltage Vᵢₙ of a display screen power supply module from a coulomb meter.

During running of an electronic device, the processor may obtain a supply voltage of a battery from the coulomb meter, and use the supply voltage of the battery as the current input voltage Vᵢₙ of the display screen power supply module. For details, refer to S1. The details are not described herein again.

S11': The processor obtains an ELVSS or luminance of a display screen and a current output current Iₒᵤₜ from a display module.

The processor may obtain the ELVSS (as a current output voltage of the display screen power supply module/a PMIC in the display screen power supply module) from the display module, or the processor may obtain the luminance of the display screen from the display module and obtain the ELVSS (as a current output voltage of the PMIC) based on a luminance-ELVSS correspondence, and obtain an input current of the display module (namely, the current output current Iₒᵤₜ of the display screen power supply module).

In some embodiments, a circuit, a component, or a module (for example, a galvanometer) configured to detect a current may be further disposed on a mainboard or the display module of the electronic device, and is configured to detect the current output current Iₒᵤₜ of the display screen power supply module and send the current output current Iₒᵤₜ to the processor.

It should be noted that, for specific content of the luminance-ELVSS correspondence and the process of determining the ELVSS based on the luminance, refer to step S1'. Details are not described herein again.

S12: The processor determines a phase switching current threshold based on the current input voltage Vᵢₙ, the ELVSS, and a first correspondence.

After obtaining a current voltage parameter (the current input voltage Vᵢₙ and the current input voltage Vₒᵤₜ (ELVSS)) of the display screen power supply module, the processor may determine, based on the current voltage parameter and the first correspondence, a phase switching current threshold that matches the current voltage parameter.

S13: The processor sends a control signal to the PMIC.

The processor may compare the current output current Iₒᵤₜ with each phase switching current threshold to obtain a power supply group with highest current power supply efficiency, and send a control signal to each PMIC, so that the display screen power supply module supplies power to the display module through the power supply group with the highest power supply efficiency.

For example, the electronic device is designed to supply power to the display module through m power supply groups in n power supply groups, and there may be m-1 phase switching current threshold registers. When Iₒᵤₜ increases to a j^{th} phase switching current threshold, the processor determines that a (j+1)^{th} power supply group (for example, a y-phase power supply group) has highest power supply efficiency, and sends a control signal to the PMIC, so that the display screen power supply module can supply power to the display module through y power supply units. When Iₒᵤₜ decreases to the j^{th} phase switching current threshold (or a difference obtained by subtracting a hysteresis current value from the j^{th} phase switching current threshold), the processor determines that a j^{th} power supply group (for example, an x-phase power supply group) has highest power supply efficiency, and sends a control signal to the PMIC, so that the display screen power supply module can supply power to the display module through x power supply units.

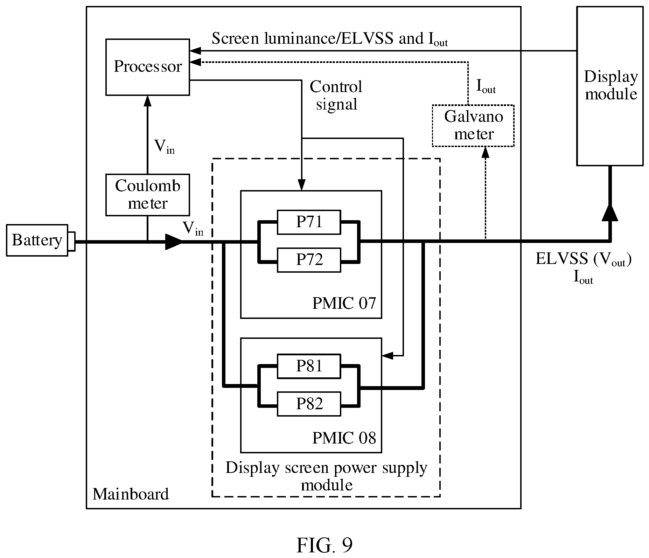

For example, refer to FIG. 9. The display screen power supply module in the electronic device includes a PMIC 07 and a PMIC 08. The PMIC 07 includes a power supply unit P71 and a power supply unit P72. The PMIC 08 includes a power supply unit P81 and a power supply unit P82. The PMIC 07 and the PMIC 08 may turn off or turn on each power supply unit of the PMIC 07 and each power supply unit of the PMIC 08 based on received control signals. In the foregoing case, the first correspondence may include a correspondence between the voltage parameter of the display screen power supply module and a phase switching current threshold I_{1→2}, a phase switching current threshold I_{2→3}, and a phase switching current threshold I_{3→4}.

The processor may obtain the current voltage parameter (for example, the current input voltage Vᵢₙ and the current output voltage Vₒᵤₜ) and the current output current Iₒᵤₜ of the display screen power supply module. Then, the processor may determine, based on the current voltage parameter and the first correspondence, the phase switching current threshold corresponding to the current voltage parameter (for example, I_{1→2}=100 mA, I_{2→3}=150 mA, and I_{3→4}=230 mA, where the hysteresis current value is 5 mA). In addition:

When the display screen power supply module is powered on, the processor sends a control signal for turning on one power supply unit to the PMIC 07, and sends a control signal for turning off one power supply unit to the PMIC 08, so that the display screen power supply module supplies power through a one-phase power supply group;
when detecting that the current output current Iₒᵤₜ of the display screen power supply module increases to 100 mA, the processor sends a control signal for turning on two power supply units to the PMIC 07, and sends a control signal for stopping supplying power to the PMIC 08, so that the display screen power supply module supplies power through a two-phase power supply group;
when detecting that the current output current Iₒᵤₜ of the display screen power supply module increases to 150 mA, the processor sends a control signal for turning on two power supply units to the PMIC 07, and sends a control signal for turning on one power supply unit to the PMIC 08, so that the display screen power supply module supplies power through a three-phase power supply group;
when detecting that the current output current Iₒᵤₜ of the display screen power supply module increases to 150 mA, the processor sends a control signal for turning on two power supply units to the PMIC 07, and sends a control signal for turning on two power supply unit to the PMIC 08, so that the display screen power supply module supplies power through a four-phase power supply group;
when detecting that the current output current Iₒᵤₜ of the display screen power supply module decreases to 150-5=145 mA, the processor sends a control signal for turning on two power supply units to the PMIC 07, and sends a control signal for turning on one power supply unit to the PMIC 08, so that the display screen power supply module supplies power through the three-phase power supply group;
when detecting that the current output current Iₒᵤₜ of the display screen power supply module decreases to 100-5=95 mA, the processor sends a control signal for turning on two power supply units to the PMIC 07, and sends a control signal for stopping supplying power to the PMIC 08, so that the display screen power supply module supplies power through the two-phase power supply group; and
when detecting that the current output current Iₒᵤₜ of the display screen power supply module decreases to 50-5=45 mA, the processor sends a control signal for turning on one power supply unit to the PMIC 07, and sends a control signal for stopping supplying power to the PMIC 08, so that the display screen power supply module supplies power through the one-phase power supply group.

In some embodiments, the PMIC may include a control unit, for example, a microcontroller, and the control unit in the PMIC may implement a function of the processor. The PMIC may collect a current voltage parameter (for example, the current input voltage and the current output voltage) and the current output current of the display screen power supply module. Then, the PMIC may determine, based on the first correspondence, the phase switching current threshold that matches the current voltage parameter. The PMIC may supply power to the display module through a power supply group with highest power supply efficiency based on the current output current and the determined phase switching current threshold.

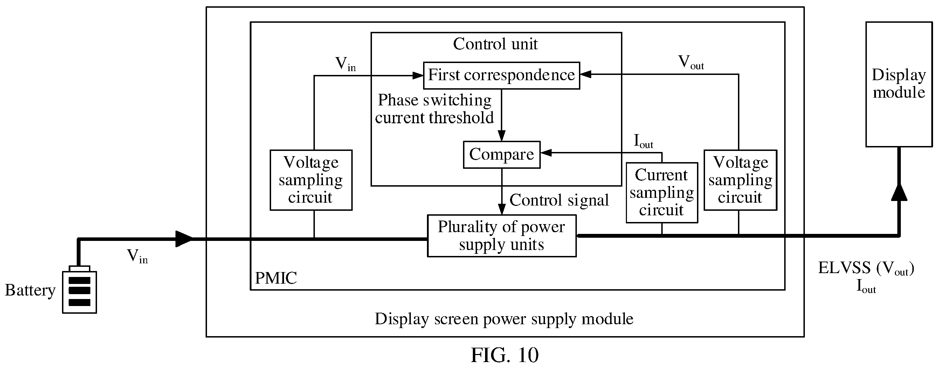

For example, FIG. 10 is a schematic flowchart of a power supply method according to some embodiments of this application.

Refer to FIG. 10. A voltage sampling circuit configured to detect an input voltage and an output voltage (or another module or circuit with a specific voltage sampling function), a current sampling circuit configured to detect an output current (or another module or circuit with a specific current sampling function), a control unit, and a plurality of power supply units may be disposed in a PMIC. During running of the electronic device, the control unit in the PMIC may detect a current voltage parameter (a current input voltage Vᵢₙ and a current input voltage Vₒᵤₜ) of the display screen power supply module via a voltage detection circuit, and detect a current output current Iₒᵤₜ of the display screen power supply module via the current sampling circuit.

After obtaining the current voltage parameter, the control unit may determine, based on the first correspondence, the current input voltage Vᵢₙ, and the current input voltage Vₒᵤₜ, a phase switching current threshold corresponding to the current voltage parameter. Then, the control unit may compare the determined phase switching current threshold with a current output current, to obtain a power supply group with highest power supply efficiency, and send a control signal to a power supply unit of the control unit (and/or a power supply unit in another PMIC), so that the display screen power supply module can supply power to a display module through the power supply group with the highest power supply efficiency. For a manner in which the control unit determines the phase switching current threshold, a manner in which the control unit determines the power supply group with the highest power supply efficiency, and a specific manner in which the control unit controls the power supply unit to supply power to the display module through the power supply group with the highest power supply efficiency, refer to the embodiments in FIG. 3A to FIG. 9. This is not limited herein.

It should be noted that the control unit shown in FIG. 10 may be a power supply unit in one PMIC, or may be a combination of control units in a plurality of PMICs. In other words, when the display screen power supply module has a plurality of PMICs, the foregoing power supply method may be implemented by a control unit in one PMIC, or the foregoing power supply method may be cooperatively implemented by a plurality of control units. This is not limited herein.

An embodiment of this application further provides a computer program product. When the program product runs on an electronic device, the electronic device may be caused to implement the power supply methods provided in the foregoing embodiments.

An embodiment of this application further provides a readable storage medium. The readable storage medium stores one or more programs/instructions. When the one or more programs/instructions are executed by an electronic device, the electronic device is caused to implement the power supply methods provided in the foregoing embodiments.

An embodiment of this application further provides an electronic device. The electronic device may include one or more processors. The one or more processors may execute one or more programs/instructions in a storage, to implement the power supply methods provided in the foregoing embodiments.

An embodiment of this application further provides a chip (for example, the PMIC in FIG. 10). The chip includes a plurality of power supply units and a control unit. The control unit is configured to control, by using the power supply methods provided in the foregoing embodiments, the plurality of power supply units to supply power to a load.

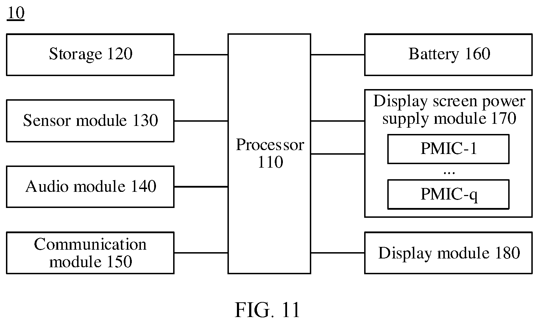

Further, FIG. 11 is a diagram of a structure of an electronic device according to some embodiments of this application. A display screen power supply module in the electronic device may supply power to a display module of the electronic device according to the power supply methods provided in the foregoing embodiments.

As shown in FIG. 11, an electronic device 10 may include a processor 110, a storage 120, a sensor module 130, an audio module 140, a communication module 150, a battery 160, a display screen power supply module 170, a display module 180, and the like.

The processor 110 is usually configured to control an overall operation by the electronic device 10, and may include one or more processing units. For example, the processor 110 may include an application processor (application processor, AP), a graphics processing unit (graphics processing unit, GPU), an image signal processor (image signal processor, ISP), a video processing unit (video processing unit, VPU) controller, a storage, a video codec, a digital signal processor (digital signal processor, DSP), a baseband processor, and/or a neural-network processing unit (neural-network processing unit, NPU), a microcontroller, and the like. Different processing units may be independent components, or may be integrated into one or more processors.

In some embodiments, the processor 110 may be configured to control, based on data collected by the sensor module 130 (for example, a current voltage parameter of the display screen power supply module 170 and a current output current of the display screen power supply module 170), the display screen power supply module to supply power to the display module 180 through a power supply group with highest power supply efficiency based on a phase switching current threshold corresponding to the current voltage parameter of the display screen power supply module 170 and the current output current in the current voltage parameter of the display screen power supply module 170.

The storage 120 may be configured to store computer-executable program code. The executable program code includes instructions. The processor 110 runs the instructions stored in the storage 120, to execute various function applications of the electronic device 10 and process data. The storage 120 may include a program storage area and a data storage area. The program storage area may store an operating system, an application required by at least one function (for example, an image display function or a video playing function), and the like. The data storage area may store data that is created or needs to be invoked during use of the electronic device 10, for example, the first correspondence and the luminance-ELVSS correspondence. In addition, the storage 120 may include a high-speed random access memory, and may further include a nonvolatile memory, for example, at least one magnetic disk storage device, a flash storage device, or a universal flash storage (universal flash storage, UFS).

The sensor module 130 may include a sensor configured to detect an operating status and a use status of the electronic device 10, including but not limited to a sensor configured to detect a voltage of each module in the electronic device 10, a sensor configured to detect a current of each module in the electronic device 10, and the like.

The audio module 140 may include a speaker, a microphone, and the like, and is configured to implement an audio function.

The communication module 150 may include a wireless communication module. The wireless communication module may provide a solution applied to the electronic device 10 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module may be one or more components that integrate at least one communication processing module. The wireless communication module receives an electromagnetic wave through the antenna, performs frequency modulation and filtering on an electromagnetic wave signal, and sends a processed signal to the processor 110. The wireless communication module may further receive a to-be-sent signal from the processor 110, perform frequency modulation and amplification on the to-be-sent signal, and convert the to-be-sent signal into an electromagnetic wave for radiation through the antenna.

The battery 160 may be configured to supply power to each module of the electronic device, for example, provide an input voltage for the display screen power supply module 170.

The display screen power supply module 170 may include q (where q is a positive integer) PMICs, and each PMIC may include one or more power supply units. The display screen power supply module 170 may be configured to supply power to the display module according to the power supply method provided in embodiments of this application.

The display module 180 may include one or more display screens, a DDIC, and the like. In some embodiments, the display module 180 may feed back parameters such as luminance, an input current, and an ELVSS of a display screen to the processor.

It should be noted that a structure of the electronic device 10 shown in this embodiment of this application does not constitute a specific limitation on the electronic device 10. In some other embodiments of this application, the electronic device 10 may include more or fewer components than those shown in the figure, or some components may be combined, or some components may be split, or there may be a different component layout. The components shown in the figure may be implemented by hardware, software, or a combination of software and hardware.

It should be noted that the electronic device 10 may be any electronic device including a display module and a display screen power supply module, and includes but is not limited to user equipment (user equipment, UE), a mobile station (mobile station, MS), a mobile terminal (mobile terminal, MT), and the like. For example, the electronic device may be a mobile phone (mobile phone), a wearable device, a tablet computer (Pad), a laptop computer, a virtual reality (virtual reality, VR) device, an augmented reality (augmented reality, AR) device, an industrial control (industrial control) device, an in-vehicle infotainment, a terminal device in a smart grid (smart grid), a terminal device in transportation security (transportation safety), a terminal device in a smart city (smart city), or the like.

It should be noted that, in embodiments of this application, "or" describes an association relationship between associated objects and represents that two relationships may exist. For example, A or B may represent the following cases: Only A exists, and only B exists, where A and B may be singular or plural.

It should be noted that, the term "connection" in embodiments of this application describes a connection relationship between two objects, and may represent two connection relationships. For example, "A is connected to B" may represent the following cases: A is directly connected to B, and A is connected to B through C.

It should be noted that, in embodiments of this application, "for example", "in some embodiments", "in another embodiment", "example", or the like is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be noted that in embodiments of this application, words such as "first" and "second" are merely used for purpose of distinguishing descriptions, and cannot be understood as an indication or implication of relative importance or an indication or implication of a sequence. In embodiments of this application, "equal to" may be used together with "greater than", which is applicable to a technical solution used in a case of "greater than"; or may be used together with "less than", which is applicable to a technical solution used in a case of "less than". It should be noted that, when used together with "greater than", "equal to" is not used together with "less than"; and when used together with "less than", "equal to" is not used together with "greater than".

In the accompanying drawings, some structural or method features may be shown in a particular arrangement and/or order. However, it should be understood that such a specific arrangement and/or sequence may not be required. In some embodiments, these features may be arranged in a manner and/or order different from those/that shown in the descriptive accompanying drawings. In addition, inclusion of the structural or method features in a specific figure does not imply that such features are required in all embodiments, and in some embodiments, these features may not be included or may be combined with another feature.

It should be noted that in the examples and specification of this patent, relational terms such as first and second are merely used to distinguish one entity or operation from another, and do not necessarily require or imply any such actual relationship or order between these entities or operations. Furthermore, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude another same element existing in the process, method, article, or device that includes the element.

## Claims

1. A power supply method, applied to an electronic device, wherein the electronic device comprises a power supply module, and the power supply module comprises a plurality of power supply units; and the method comprises:
supplying power to a load of the electronic device through a first quantity of the power supply units;
detecting, when a voltage parameter of the power supply module is a first voltage parameter, that a current output by the power supply module to the load changes to a first phase switching current threshold, and switching a quantity of power supply units used by the power supply module to supply power to the load from the first quantity to a second quantity, wherein the voltage parameter of the power supply module comprises at least one of an input voltage and an output voltage of the power supply module; and
detecting, when the voltage parameter of the power supply module is a second voltage parameter, that the current output by the power supply module to the load changes to a second phase switching current threshold, and switching the quantity of power supply units used by the power supply module to supply power to the load from the first quantity to the second quantity, wherein the second voltage parameter is different from the first voltage parameter, and the second phase switching current threshold is different from the first phase switching current threshold.

2. The method according to claim 1, wherein the second quantity is greater than the first quantity; and the detecting that the current output by the power supply module to the load changes to the first phase switching current threshold comprises: detecting that the current output by the power supply module to the load increases to the first phase switching current threshold.

3. The method according to claim 2, wherein when the voltage parameter of the power supply module is the first voltage parameter, and the current output by the power supply module to the load is less than the first phase switching current threshold, power supply efficiency of supplying power to the load by the power supply module through the first quantity of power supply units is higher than power supply efficiency of supplying power to the load through the second quantity of power supply units;
when the voltage parameter of the power supply module is the first voltage parameter, and the current output by the power supply module to the load is greater than the first phase switching current threshold, the power supply efficiency of supplying power to the load by the power supply module through the second quantity of power supply units is higher than the power supply efficiency of supplying power to the load through the first quantity of power supply units;
when the voltage parameter of the power supply module is the second voltage parameter, and the current output by the power supply module to the load is less than the second phase switching current threshold, the power supply efficiency of supplying power to the load by the power supply module through the first quantity of power supply units is higher than the power supply efficiency of supplying power to the load through the second quantity of power supply units; and
when the voltage parameter of the power supply module is the second voltage parameter, and the current output by the power supply module to the load is greater than the second phase switching current threshold, the power supply efficiency of supplying power to the load by the power supply module through the second quantity of power supply units is higher than the power supply efficiency of supplying power to the load through the first quantity of power supply units.

4. The method according to claim 1, wherein the second quantity is less than the first quantity; and
the detecting that the current output by the power supply module to the load changes to the first phase switching current threshold comprises:
detecting that the current output by the power supply module to the load decreases to the first phase switching current threshold.

5. The method according to claim 4, wherein when the voltage parameter of the power supply module is the first voltage parameter, and the current output by the power supply module to the load is less than the first phase switching current threshold or the current output by the power supply module to the load is less than a sum of the first phase switching current threshold and a first current value, power supply efficiency of supplying power to the load by the power supply module through the second quantity of power supply units is higher than power supply efficiency of supplying power to the load through the first quantity of power supply units;
when the voltage parameter of the power supply module is the first voltage parameter, and the current output by the power supply module to the load is greater than the first phase switching current threshold or the current output by the power supply module to the load is greater than the sum of the first phase switching current threshold and the first current value, the power supply efficiency of supplying power to the load by the power supply module through the first quantity of power supply units is higher than the power supply efficiency of supplying power to the load through the second quantity of power supply units;
when the voltage parameter of the power supply module is the second voltage parameter, and the current output by the power supply module to the load is less than the second phase switching current threshold or the current output by the power supply module to the load is less than a sum of the second phase switching current threshold and the first current value, the power supply efficiency of supplying power to the load by the power supply module through the second quantity of power supply units is higher than the power supply efficiency of supplying power to the load through the first quantity of power supply units; and
when the voltage parameter of the power supply module is the second voltage parameter, and the current output by the power supply module to the load is greater than the second phase switching current threshold or the current output by the power supply module to the load is greater than the sum of the second phase switching current threshold and the first current value, the power supply efficiency of supplying power to the load by the power supply module through the first quantity of power supply units is higher than the power supply efficiency of supplying power to the load through the second quantity of power supply units.

6. The method according to claim 1, wherein the first phase switching current threshold is determined based on the first voltage parameter and a first correspondence, and the second phase switching current threshold is determined based on the second voltage parameter and the first correspondence, wherein the first correspondence is a correspondence between the voltage parameter of the power supply module and a phase switching current threshold.

7. The method according to claim 6, wherein the power supply module comprises three power supply units, and the three power supply units are disposed in a first power management integrated circuit; and the detecting, when the voltage parameter of the power supply module is the first voltage parameter, that the current output by the power supply module to the load changes to the first phase switching current threshold, and switching the quantity of power supply units used by the power supply module to supply power to the load from the first quantity to the second quantity specifically comprises:
obtaining, from the first correspondence based on the first voltage parameter, a third phase switching current threshold and a fourth phase switching current threshold that correspond to the first voltage parameter, wherein the fourth phase switching current threshold is greater than the third phase switching current threshold; and
detecting, when the first phase switching current threshold is the third phase switching current threshold, that the current output by the power supply module to the load increases to the first phase switching current threshold, and switching the quantity of power supply units used by the power supply module to supply power to the load from 1 to 2;
detecting, when the first phase switching current threshold is the fourth phase switching current threshold, that the current output by the power supply module to the load increases to the first phase switching current threshold, and switching the quantity of power supply units used by the power supply module to supply power to the load from 2 to 3;
detecting, when the first phase switching current threshold is the third phase switching current threshold or the first phase switching current threshold is a difference obtained by subtracting a first current value from the third phase switching current threshold, that the current output by the power supply module to the load decreases to the first phase switching current threshold, and switching the quantity of power supply units used by the power supply module to supply power to the load from 2 to 1; or
detecting, when the first phase switching current threshold is the fourth phase switching current threshold or the first phase switching current threshold is a difference obtained by subtracting the first current value from the fourth phase switching current threshold, that the current output by the power supply module to the load decreases to the first phase switching current threshold, and switching the quantity of power supply units used by the power supply module to supply power to the load from 3 to 2.

8. The method according to claim 7, wherein the detecting, when the voltage parameter of the power supply module is the second voltage parameter, that the current output by the power supply module to the load changes to the second phase switching current threshold, and switching the quantity of power supply units used by the power supply module to supply power to the load from the first quantity to the second quantity specifically comprises:
obtaining, from the first correspondence based on the second voltage parameter, a fifth phase switching current threshold and a sixth phase switching current threshold that correspond to the second voltage parameter, wherein the sixth phase switching current threshold is greater than the fifth phase switching current threshold, the sixth phase switching current threshold is different from the fourth phase switching current threshold, and the fifth phase switching current threshold is different from the third phase switching current threshold; and
detecting, when the second phase switching current threshold is the fifth phase switching current threshold, that the current output by the power supply module to the load increases to the second phase switching current threshold, and switching the quantity of power supply units used by the power supply module to supply power to the load from 1 to 2;
detecting, when the second phase switching current threshold is the sixth phase switching current threshold, that the current output by the power supply module to the load increases to the second phase switching current threshold, and switching the quantity of power supply units used by the power supply module to supply power to the load from 2 to 3;
detecting, when the second phase switching current threshold is the fifth phase switching current threshold or the second phase switching current threshold is a difference obtained by subtracting the first current value from the fifth phase switching current threshold, that the current output by the power supply module to the load decreases to the second phase switching current threshold, and switching the quantity of power supply units used by the power supply module to supply power to the load from 2 to 1; or
detecting, when the second phase switching current threshold is the sixth phase switching current threshold or the second phase switching current threshold is a difference obtained by subtracting the first current value from the sixth phase switching current threshold, that the current output by the power supply module to the load decreases to the second phase switching current threshold, and switching the quantity of power supply units used by the power supply module to supply power to the load from 3 to 2.

9. The method according to claim 6, wherein the power supply module comprises a first power supply unit, a second power supply unit, a third power supply unit, and a fourth power supply unit, the first power supply unit and the second power supply unit are disposed in a second power management integrated circuit, and the third power supply unit and the fourth power supply unit are disposed in a third power management integrated circuit; and the detecting, when the voltage parameter of the power supply module is the first voltage parameter, that the current output by the power supply module to the load changes to the first phase switching current threshold, and switching the quantity of power supply units used by the power supply module to supply power to the load from the first quantity to the second quantity specifically comprises:
obtaining, from the first correspondence based on the first voltage parameter, a seventh phase switching current threshold and an eighth phase switching current threshold that correspond to the first voltage parameter, wherein the eighth phase switching current threshold is greater than the seventh phase switching current threshold; and
detecting, when the first phase switching current threshold is the seventh phase switching current threshold, that the current output by the power supply module to the load increases to the first phase switching current threshold, and switching the quantity of power supply units used by the power supply module to supply power to the load from 1 to 2;
detecting, when the first phase switching current threshold is the eighth phase switching current threshold, that the current output by the power supply module to the load increases to the first phase switching current threshold, and switching the quantity of power supply units used by the power supply module to supply power to the load from 2 to 4;
detecting, when the first phase switching current threshold is the seventh phase switching current threshold or the first phase switching current threshold is a difference obtained by subtracting a first current value from the seventh phase switching current threshold, that the current output by the power supply module to the load decreases to the first phase switching current threshold, and switching the quantity of power supply units used by the power supply module to supply power to the load from 2 to 1; or
detecting, when the first phase switching current threshold is the eighth phase switching current threshold or the first phase switching current threshold is a difference obtained by subtracting the first current value from the eighth phase switching current threshold, that the current output by the power supply module to the load decreases to the first phase switching current threshold, and switching the quantity of power supply units used by the power supply module to supply power to the load from 4 to 2.

10. The method according to claim 9, wherein the detecting, when the voltage parameter of the power supply module is the second voltage parameter, that the current output by the power supply module to the load changes to the second phase switching current threshold, and switching the quantity of power supply units used by the power supply module to supply power to the load from the first quantity to the second quantity specifically comprises:
obtaining, from the first correspondence based on the first voltage parameter, a ninth phase switching current threshold and a tenth phase switching current threshold that correspond to the first voltage parameter, wherein the tenth phase switching current threshold is greater than the ninth phase switching current threshold; and
detecting, when the second phase switching current threshold is the ninth phase switching current threshold, that the current output by the power supply module to the load increases to the second phase switching current threshold, and switching the quantity of power supply units used by the power supply module to supply power to the load from 1 to 2;
detecting, when the second phase switching current threshold is the tenth phase switching current threshold, that the current output by the power supply module to the load increases to the second phase switching current threshold, and switching the quantity of power supply units used by the power supply module to supply power to the load from 2 to 4;
detecting, when the second phase switching current threshold is the ninth phase switching current threshold or the second phase switching current threshold is a difference obtained by subtracting the first current value from the ninth phase switching current threshold, that the current output by the power supply module to the load decreases to the second phase switching current threshold, and switching the quantity of power supply units used by the power supply module to supply power to the load from 2 to 1; or
detecting, when the second phase switching current threshold is the tenth phase switching current threshold or the second phase switching current threshold is a difference obtained by subtracting the first current value from the tenth phase switching current threshold, that the current output by the power supply module to the load decreases to the second phase switching current threshold, and switching the quantity of power supply units used by the power supply module to supply power to the load from 4 to 2.

11. The method according to claim 9 or 10, wherein the switching the quantity of power supply units used by the power supply module to supply power to the load from 1 to 2 specifically comprises: switching the power supply unit used to supply power to the load from the first power supply unit to the first power supply unit and the second power supply unit; and
the switching the quantity of power supply units used by the power supply module to supply power to the load from 2 to 4 specifically comprises: switching the power supply units used to supply power to the load from the first power supply unit and the second power supply unit to the first power supply unit, the second power supply unit, the third power supply unit, and the fourth power supply unit.

12. The method according to any one of claims 1 to 11, wherein the load is a display screen of the electronic device, and the output voltage of the power supply module is used to provide an emitter layer voltage supply source for the display screen.

13. The method according to claim 12, wherein the output voltage of the power supply module is determined based on luminance of the display screen and a second correspondence, wherein the second correspondence is a correspondence between a voltage value of the emitter layer voltage supply source of the display screen and the luminance of the display screen.

14. A power supply method, applied to an electronic device, wherein the electronic device comprises a power supply module, and the power supply module comprises a plurality of power supply units; and the method comprises:
obtaining a third voltage parameter of the power supply module, wherein a voltage parameter of the power supply module comprises at least one of an input voltage and an output voltage of the power supply module;
determining, based on a first correspondence, at least one phase switching current threshold corresponding to the third voltage parameter, wherein the first correspondence is a correspondence between the voltage parameter of the power supply module and a phase switching current threshold; and
supplying, based on a relationship between the at least one phase switching current threshold and a first current output by the power supply module to a load of the electronic device, power to the load through a third quantity of the power supply units, wherein when the voltage parameter of the power supply module is the third voltage parameter, and a current output by the power supply module to the load is the first current, power supply efficiency of supplying power to the load by the power supply module through the third quantity of the power supply units is higher than power supply efficiency of supplying power to the load through another quantity of the power supply units.

15. The method according to claim 14, wherein the at least one phase switching current threshold comprises an eleventh phase switching current threshold;
when the voltage parameter of the power supply module is the third voltage parameter, and the current output by the power supply module to the load is greater than the eleventh phase switching current threshold, the power supply efficiency of supplying power to the load by the power supply module through the third quantity of power supply units is higher than power supply efficiency of supplying power to the load through a fourth quantity of power supply units, wherein the fourth quantity is less than the third quantity;
when the voltage parameter of the power supply module is the third voltage parameter, and the current output by the power supply module to the load is less than the eleventh phase switching current threshold, the power supply efficiency of supplying power to the load by the power supply module through the third quantity of power supply units is lower than the power supply efficiency of supplying power to the load through the fourth quantity of power supply units; and
the supplying, based on the relationship between the at least one phase switching current threshold and the first current output by the power supply module to the load of the electronic device, power to the load through the third quantity of the power supply units specifically comprises: detecting that the first current increases to the eleventh phase switching current threshold, and supplying power to the load through the third quantity of the power supply units.

16. The method according to claim 14, wherein the at least one phase switching current threshold comprises a twelfth phase switching current threshold;
when the voltage parameter of the power supply module is the third voltage parameter, and the current output by the power supply module to the load is greater than the twelfth phase switching current threshold, the power supply efficiency of supplying power to the load by the power supply module through the third quantity of power supply units is lower than power supply efficiency of supplying power to the load through a fifth quantity of power supply units, wherein the fifth quantity is greater than the third quantity;
when the voltage parameter of the power supply module is the third voltage parameter, and the current output by the power supply module to the load is less than the twelfth phase switching current threshold, the power supply efficiency of supplying power to the load by the power supply module through the third quantity of power supply units is higher than the power supply efficiency of supplying power to the load through the fifth quantity of power supply units; and
the supplying, based on the relationship between the at least one phase switching current threshold and the first current output by the power supply module to the load of the electronic device, power to the load through the third quantity of the power supply units specifically comprises: detecting that the first current decreases to the twelfth phase switching current threshold or the first current decreases to a difference obtained by subtracting a third current value from the twelfth phase switching current threshold, and supplying power to the load through the third quantity of the power supply units.

17. An electronic device, comprising one or more processors, configured to perform the power supply method according to any one of claims 1 to 13.

18. A readable storage medium, wherein the readable storage medium comprises instructions; and when the instructions are executed by an electronic device, the electronic device is caused to implement the power supply method according to any one of claims 1 to 13.

19. A chip, wherein the chip comprises a control unit, a voltage sampling circuit, a current sampling circuit, and the power supply module, wherein
the voltage sampling circuit is configured to collect the first voltage parameter or the second voltage parameter;
the current sampling circuit is configured to collect a current output by the power supply module to the load; and
the control unit is configured to perform the power supply method according to any one of claims 1 to 13.
